# EUROPEAN PATENT SPECIFICATION

(11) **EP 4 245 819 B1**
(45) Date of publication and mention of the grant of the patent: **10.09.2025**
(21) Application number: 21891702.9
(22) Date of filing: 01.11.2021
(51) Int. Cl.: C09D 167/00, C09D 183/04, C09D 201/10, C09K 3/00

(54) **COATING AGENT COMPOSITION, SURFACE TREATMENT AGENT COMPRISING SAID COMPOSITION, AND ARTICLE SURFACE-TREATED WITH SAID SURFACE TREATMENT AGENT**
BESCHICHTUNGSMITTELZUSAMMENSETZUNG, OBERFLÄCHENBEHANDLUNGSMITTEL MIT DIESER ZUSAMMENSETZUNG UND MIT DIESEM OBERFLÄCHENBEHANDLUNGSMITTEL OBERFLÄCHENBEHANDELTER ARTIKEL
COMPOSITION D'AGENT DE REVÊTEMENT, AGENT DE TRAITEMENT DE SURFACE COMPRENANT LADITE COMPOSITION ET ARTICLE TRAITÉ EN SURFACE À L'AIDE DUDIT AGENT DE TRAITEMENT DE SURFACE

(30) Priority: 13.11.2020 JP 2020189284
(43) Date of publication of application: 20.09.2023
(73) Proprietor: SHIN-ETSU CHEMICAL CO., LTD., Tokyo 1000005 (JP)
(72) Inventor: MORI, Seiya, Annaka-shi, Gunma 379-0224 (JP)
(74) Representative: Ter Meer Steinmeister & Partner
(86) International application number: PCT/JP2021/040250
(87) International publication number: WO 2022/102455

(56) References cited:
- WO-A1-2018/008505
- WO-A1-2019/082583
- WO-A1-2019/159476
- WO-A1-2019/159476
- CN-B- 107 298 930
- JP-A- 2013 194 055

## Description

### TECHNICAL FIELD

The present invention relates to a coating agent composition excellent in lipophilicity and abrasion resistance, a surface treatment agent containing the composition, and an article surface-treated with the surface treatment agent.

### BACKGROUND ART

Recently, there is an accelerating demand to mount touch panels on mobile phones and other displays. Because of manipulation by touching with the finger, fingerprints and stains deposit on the touch panels, which look dirty or indistinct. Thus, there is an annually increasing need for the technology of preventing fingerprints from depositing on a display surface or making fingerprints inconspicuous for better appearance or visibility, and it is thus desired to develop a material capable of meeting these requirements.

In general, silane coupling agents are well known as a surface modifier for glass and fabric substrates and widely used as coating agents for surfaces of various substrates. The silane coupling agent contains an organic functional group and a reactive silyl group (typically a hydrolyzable silyl group such as an alkoxysilyl group) in the molecule, and the hydrolyzable silyl group undergoes self-condensation reaction due to moisture in the air or the like to form a coating. Since the hydrolyzable silyl group forms chemical and physical bonds with the surface of glass, metal, or the like, the coating becomes a tough coating having durability.

Thus, there have been disclosed many compositions capable of forming a coating with a water/oil-repellent property, an anti-fouling property and other properties on the substrate surface by using a fluoropolyether group-containing polymer which is obtained by introducing a hydrolyzable silyl group into a fluoropolyether group-containing compound (Patent Documents 1 to 6: JP-W 2008-534696, JP-W 2008-537557, JP-A 2012-072272, JP-A 2012-157856, JP-A 2013-136833, JP-A 2015-199906).

However, although the conventional coating layer formed using a fluoropolyether group-containing polymer is highly water/oil-repellent and easy to wipe off stains, there is one problem that the coating surface repels sebum contained in fingerprints to form fine oil droplets, which scatter light, so that the fingerprints look conspicuous.

Also, there has been disclosed a composition that is tightly adherent to a substrate surface and can form a lipophilic coating on the substrate surface by using a silane compound obtained by introducing a hydrolyzable silyl group into a lipophilic compound (Patent Document 7: JP-A 2001-353808).

Since the composition containing the silane compound obtained by introducing the hydrolyzable silyl group into the lipophilic compound can form a cured film excellent in lipophilicity; therefore, once fingerprints and the like deposit thereon, the sebum does not scatter light, and the fingerprints become inconspicuous.

However, a conventional coating agent composition capable of forming a cured film excellent in lipophilicity is worn out due to abrasion associated with actual use, and the lipophilicity is reduced; therefore, the coating agent composition does not have practically satisfactory performance.

WO2019/159476A1 discloses a surface treatment agent based on a siloxane bearing a lipophilic substituent.

### PRIOR ART DOCUMENTS

### PATENT DOCUMENTS

Patent Document 1: JP-W 2008-534696
Patent Document 2: JP-W 2008-537557
Patent Document 3: JP-A 2012-072272
Patent Document 4: JP-A 2012-157856
Patent Document 5: JP-A 2013-136833
Patent Document 6: JP-A 2015-199906
Patent Document 7: JP-A 2001-353808

### SUMMARY OF INVENTION

### TECHNICAL PROBLEM

The present invention has been made in view of the above circumstances, and an object thereof is to provide a coating agent composition capable of forming a cured film excellent in lipophilicity and abrasion resistance, a surface treatment agent containing the composition, and an article surface-treated with the surface treatment agent.

### SOLUTION TO PROBLEM

As a result of intensive studies to achieve the above object, the present inventor has found that a coating agent composition containing the following component (A) and component (B) as essential components, in which a weight ratio of the component (A) to the component (B) is within a range of 0.1 < (A)/(B) < 10 can form a cured film excellent in lipophilicity and abrasion resistance, and can solve the problems of the above-described conventional techniques, thereby completing the present invention.
(A) A lipophilic group-containing (hydrolyzable) organosiloxane compound containing a lipophilic group selected from a group represented by formula (-C(=O)OR¹), a group represented by formula (-O-C(=O)R¹), a group represented by formula (-C(=O)NR¹₂), a group represented by formula (-C(=O)SR¹), and a group represented by formula (-P(=O)(OR¹)₂) (in the formula, R¹ is independently a hydrogen atom, an alkyl group having 1 to 30 carbon atoms, an aryl group having 6 to 30 carbon atoms, or an aralkyl group having 7 to 30 carbon atoms) and a silanol group or a hydrolyzable silyl group and/or a partial (hydrolysis) condensate thereof, and
(B) a polyol ester including a condensate of a divalent to hexavalent alcohol and a fatty acid having 3 to 22 carbon atoms.

Therefore, the present invention provides the following coating agent composition, a surface treatment agent containing the composition, and an article surface-treated with the surface treatment agent.
1. A coating agent composition comprising as essential components:
   (A) a lipophilic group-containing (hydrolyzable) organosiloxane compound containing a lipophilic group selected from a group having formula (-C(=O)OR¹), a group having formula (-O-C(=O)R¹), a group having formula (-C(=O)NR¹₂), a group having formula (-C(=O)SR¹), and a group having formula (-P(=O)(OR¹)₂), wherein in the formula, R¹ is independently a hydrogen atom, an alkyl group having 1 to 30 carbon atoms, an aryl group having 6 to 30 carbon atoms, or an aralkyl group having 7 to 30 carbon atoms, and a silanol group or a hydrolyzable silyl group and/or a partial (hydrolysis) condensate thereof; and
   (B) a polyol ester including a condensate of a divalent to hexavalent alcohol and a fatty acid having 3 to 22 carbon atoms,
   wherein a weight ratio of the component (A) to the component (B) is within a range of 0.1 < (A)/(B) < 10.
2. The coating agent composition according to 1, wherein the component (A) is a lipophilic group-containing (hydrolyzable) organosiloxane compound having the following general formula (1) and/or a partial (hydrolysis) condensate thereof: 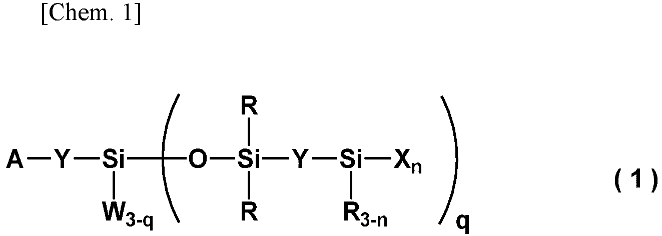 wherein A is -C(=O)OR¹, -O-C(=O)R¹, -C(=O)NR¹₂, -C(=O)SR¹, or -P(=O)(OR¹)₂, wherein R¹ is independently a hydrogen atom, an alkyl group having 1 to 30 carbon atoms, an aryl group having 6 to 30 carbon atoms, or an aralkyl group having 7 to 30 carbon atoms, Y is independently a divalent organic group, W is independently an alkyl group having 1 to 4 carbon atoms, a phenyl group, a hydroxyl group, or a hydrolyzable group, R is independently an alkyl group having 1 to 4 carbon atoms or a phenyl group, X is independently a hydroxyl group or a hydrolyzable group, n is an integer of 1 to 3, and q is an integer of 1 to 3.
3. The coating agent composition according to 2, wherein in the lipophilic group-containing (hydrolyzable) organosiloxane compound having the general formula (1) of the component (A), Y is independently an alkylene group having 2 to 30 carbon atoms which may contain a divalent group selected from -O-, -S-, -NR-, -C(=O)-, -C(=O)O-, -C(=O)NR-, -OC(=O)NR-, wherein R is an alkyl group having 1 to 4 carbon atoms or a phenyl group, a silalkylene group, a silarylene group, and a linear, branched, or cyclic divalent organo (poly) siloxane residue having 2 to 10 silicon atoms, and may contain an arylene group having 6 to 20 carbon atoms.
4. The coating agent composition according to 2 or 3, wherein in the lipophilic group-containing (hydrolyzable) organosiloxane compound having the general formula (1) of the component (A), W is independently selected from the groups consisting of an alkyl group having 1 to 4 carbon atoms, a phenyl group, a hydroxyl group, an alkoxy group having 1 to 10 carbon atoms, an alkoxy-substituted alkoxy group having 2 to 10 carbon atoms, an acyloxy group having 1 to 10 carbon atoms, an alkenyloxy group having 2 to 10 carbon atoms, a halogen atom, an oxime group, an isocyanate group, and a cyanate group.
5. The coating agent composition according to any one of 1 to 4, wherein the component (A) is a lipophilic group-containing (hydrolyzable) organosiloxane compound having the following general formula (2) and/or a partial (hydrolysis) condensate thereof: 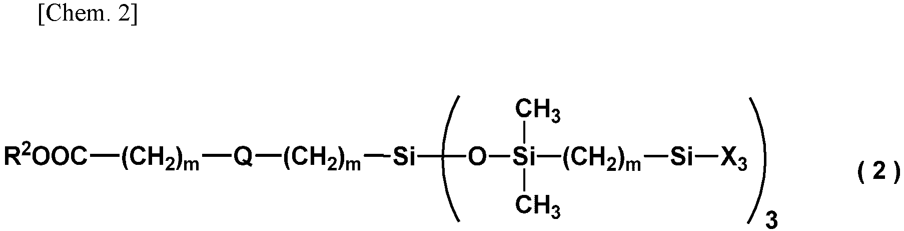 wherein R² is an alkyl group having 1 to 20 carbon atoms, an aryl group having 6 to 20 carbon atoms, or an aralkyl group having 7 to 20 carbon atoms, Q is a single bond or a divalent group selected from a silalkylene group, a silarylene group, and a linear, branched, or cyclic divalent organo (poly) siloxane residue having 2 to 10 silicon atoms, m is independently an integer of 1 to 20, and X is independently a hydroxyl group or a hydrolyzable group.
6. The coating agent composition according to any one of 1 to 5, wherein the component (B) is a polyol ester including a condensate of a polyhydric alcohol selected from neopentyl glycol, trimethylolethane, trimethylolpropane, glycerol, pentaerythritol, and dipentaerythritol and a fatty acid having 3 to 22 carbon atoms.
7. A surface treatment agent containing the coating agent composition according to any one of 1 to 6.
8. The surface treatment agent according to 7, further including a solvent.
9. The surface treatment agent according to 7 or 8, further including a hydrolysis condensation catalyst.
10. The surface treatment agent according to any one of 7 to 9, providing a cured film having an oleic acid contact angle of 30° or less at 25°C and a relative humidity of 40%.
11. An article having a cured film of the surface treatment agent according to any one of 7 to 10 on its surface.

### ADVANTAGEOUS EFFECTS OF INVENTION

The coating agent composition of the present invention contains a specific organosiloxane compound containing a lipophilic group and a hydroxyl group-containing silyl group (silanol group) or a hydrolyzable silyl group, and/or a partial (hydrolysis) condensate thereof, and a specific polyol ester in a specific ratio, and a cured film coated on a surface of a substrate with a surface treatment agent containing the composition can wet and spread sebum contained in a fingerprint on the substrate when the fingerprint deposits. When the coating agent composition contains a polyol ester excellent in lubricity, friction is reduced, and a cured film excellent in abrasion resistance can be provided. Thus, an article having a cured film surface-treated with a surface treatment agent containing the coating agent composition is excellent in lipophilicity and abrasion resistance.

### DESCRIPTION OF EMBODIMENTS

A coating agent composition of the present invention contains, as essential components, a specific lipophilic group-containing (hydrolyzable) organosiloxane compound containing a lipophilic group and a silanol group or a hydrolyzable silyl group and/or a partial (hydrolysis) condensate thereof (hereinafter, referred to as a component (A)) and a specific polyol ester (hereinafter, referred to as a component (B)), in which a weight ratio of the component (A) to the component (B) is within a range of 0.1 < (A)/(B) < 10.

The present inventor has found that when the lipophilic group-containing (hydrolyzable) organosiloxane compound and/or the partial (hydrolysis) condensate thereof of the component (A) that exhibits adhesion to a substrate and a polyol ester of the component (B) that exhibits lubricity of a surface are blended at a specific ratio, the coating agent composition can form a cured film excellent in lipophilicity and abrasion resistance.

The component (A) which is a first essential component in the coating agent composition of the present invention is a lipophilic group-containing (hydrolyzable) organosiloxane compound containing a lipophilic group selected from the groups represented by formula (-C(=O)OR¹), a group represented by formula (-O-C(=O)R¹), a group represented by formula (-C(=O)NR¹₂), a group represented by formula (-C(=O)SR¹), and a group represented by formula (-P(=O)(OR¹)₂) and a silanol group or a hydrolyzable silyl group, and may be a partial (hydrolysis) condensate thereof, or a mixture of one kind or two or more kinds thereof.

Here, R¹ is independently a hydrogen atom, an alkyl group having 1 to 30 carbon atoms, an aryl group having 6 to 30 carbon atoms, or an aralkyl group having 7 to 30 carbon atoms, and the alkyl group may be linear, branched, cyclic, or a combination thereof. R¹ is preferably a linear alkyl group having 1 to 8 carbon atoms, and more preferably a linear alkyl group having 2 to 4 carbon atoms.

Specific examples of R¹ include a hydrogen atom, alkyl groups such as a methyl group, an ethyl group, a propyl group, a butyl group, a pentyl group, a hexyl group, a heptyl group, an octyl group, a nonyl group, a decyl group, a dodecyl group, a tetradecyl group, a hexadecyl group, an octadecyl group, an isopropyl group, an isobutyl group, a tert-butyl group, a neopentyl group, a thexyl group, a cyclopentyl group, a cyclohexyl group, a cycloheptyl group, a cyclohexylmethyl group, a norbornyl group, a decahydronaphthyl group, an adamantyl group, and an adamantylmethyl group, aryl groups such as a phenyl group, a tolyl group, and a naphthyl group, and aralkyl groups such as a benzyl group, a phenylethyl group, and a phenylpropyl group. R¹ is preferably a methyl group, an ethyl group, a butyl group, or an octyl group.

The lipophilic group-containing (hydrolyzable) organosiloxane compound of the component (A) is desirably represented by the following general formula (1). 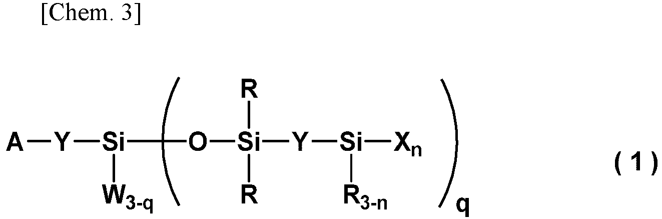 wherein A is -C(=O)OR¹, -O-C(=O)R¹, -C(=O)NR¹₂, -C(=O)SR¹, or -P(=O)(OR¹)₂ (R¹ is independently a hydrogen atom, an alkyl group having 1 to 30 carbon atoms, an aryl group having 6 to 30 carbon atoms, or an aralkyl group having 7 to 30 carbon atoms), Y is independently a divalent organic group, W is independently an alkyl group having 1 to 4 carbon atoms, a phenyl group, a hydroxyl group, or a hydrolyzable group, R is independently an alkyl group having 1 to 4 carbon atoms or a phenyl group, X is independently a hydroxyl group or a hydrolyzable group, n is an integer of 1 to 3, and q is an integer of 1 to 3.

In the above formula (1), A is any one of an ester, carboxylic acid or aldehyde of the formula: -C(=O)OR¹, or -O-C(=O)R¹, an unsubstituted or substituted amide of the formula: -C(=O)NR¹₂, a thioester or thioic acid of the formula: -C(=O)SR¹, and a phosphonic acid ester or phosphonic acid of the formula: -P(=O)(OR¹)₂, that is, a lipophilic terminal group characteristic of the present invention.

R¹ is the same as R¹ described above, is exemplified in the same way, and is preferably a methyl group, an ethyl group, a butyl group, or an octyl group.

As A, for example, the following can be exemplified.

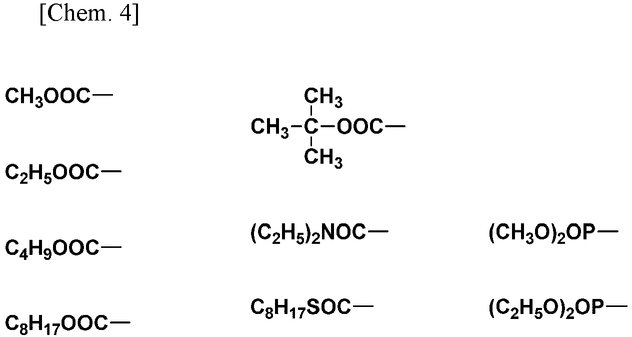

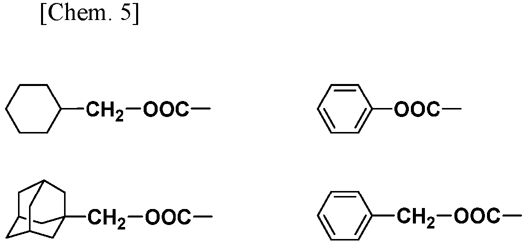

In the above formula (1), W which may be different from each other is an alkyl group having 1 to 4 carbon atoms, a phenyl group, a hydroxyl group, or a hydrolyzable group. Examples of such W include alkyl groups such as a methyl group, an ethyl group, a propyl group, and a butyl group, alkoxy groups having 1 to 10 carbon atoms such as a phenyl group, a hydroxyl group, a methoxy group, an ethoxy group, a propoxy group, an isopropoxy group, and a butoxy group, alkoxy-substituted alkoxy groups having 2 to 10 carbon atoms such as a methoxymethoxy group and a methoxyethoxy group, acyloxy groups having 1 to 10 carbon atoms such as an acetoxy group, alkenyloxy groups having 2 to 10 carbon atoms such as an isopropenoxy group, halogen atoms such as a fluorine atom, a chlorine atom, a bromine atom, and an iodine atom, an oxime group, an isocyanate group, and a cyanate group. Among them, a methyl group, a methoxy group, an ethoxy group, an isopropenoxy group, and a chlorine atom are preferable.

In the above formula (1), X which may be different from each other is a hydroxyl group or a hydrolyzable group. Examples of such X include alkoxy groups having 1 to 10 carbon atoms such as a hydroxyl group, a methoxy group, an ethoxy group, a propoxy group, an isopropoxy group, and a butoxy group, alkoxy-substituted alkoxy groups having 2 to 10 carbon atoms such as a methoxymethoxy group and a methoxyethoxy group, acyloxy groups having 1 to 10 carbon atoms such as an acetoxy group, alkenyloxy groups having 2 to 10 carbon atoms such as an isopropenoxy group, halogen atoms such as a fluorine atom, a chlorine atom, a bromine atom, and an iodine atom, an oxime group, an isocyanate group, and a cyanate group. Among them, a methoxy group, an ethoxy group, an isopropenoxy group, and a chlorine atom are preferable.

In the above formula (1), R is independently an alkyl group having 1 to 4 carbon atoms such as a methyl group, an ethyl group, a propyl group, an isopropyl group, a butyl group, an isobutyl group, a sec-butyl group, or a tert-butyl group, or a phenyl group, and among them, a methyl group is preferable.

In the above formula (1), Y is independently a divalent organic group, preferably an alkylene group having 2 to 30 carbon atoms, particularly an alkylene group having 2 to 20 carbon atoms which may contain a divalent group selected from among -O-, -S-, -NR-, -C(=O)-, -C(=O)O-, -C(=O)NR-, -OC(=O)NR- (R is the same as described above), a silalkylene group, a silarylene group, and a linear, branched, or cyclic divalent organo (poly) siloxane residue having 2 to 10 silicon atoms, and which may contain an arylene group having 6 to 20 carbon atoms. More preferably Y is a divalent group represented by the following formula (3).
[Chem. 6]

-R³-Z-(R³)ₐ- (3)

In the above formula (3), R³ is independently a divalent hydrocarbon group, specific examples thereof include an alkylene group having 1 to 30 carbon atoms such as a methylene group, an ethylene group, a propylene group (trimethylene group, methylethylene group), a butylene group (tetramethylene group, methylpropylene group), a hexamethylene group, an octamethylene group, and a decamethylene group, and an alkylene group having 7 to 30 carbon atoms including an arylene group having 6 to 20 carbon atoms such as a phenylene group, and an alkylene group having 2 to 20 carbon atoms is preferable.

In the above formula (3), Z is a single bond or a divalent group selected from among -O-, -S-, -NR-, -C(=O)-, -C(=O)O-, -C(=O)NR-, -OC(=O)NR-, a silalkylene group, a silarylene group, and a linear, branched, or cyclic divalent organo (poly) siloxane residue having 2 to 10 silicon atoms, preferably 2 to 5 silicon atoms, and R is the same as described above.

Here, examples of the silalkylene group and the silarylene group include those shown below. 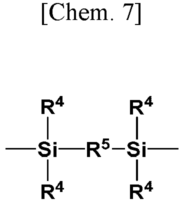 wherein R⁴ is an alkyl group having 1 to 4 carbon atoms such as a methyl group, an ethyl group, a propyl group, or a butyl group, or an aryl group having 6 to 10 carbon atoms such as a phenyl group, and R⁴ may be the same or different. R⁵ is an alkylene group having 1 to 12 carbon atoms such as a methylene group, an ethylene group, a propylene group (trimethylene group, methylethylene group), a butylene group (tetramethylene group, methylpropylene group), a hexamethylene group, or an octamethylene group, or an arylene group having 6 to 12 carbon atoms such as a phenylene group.

Examples of the linear, branched, or cyclic divalent organo (poly) siloxane residue having 2 to 10 silicon atoms, preferably 2 to 5 silicon atoms include those shown below. 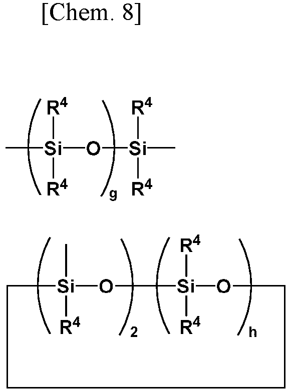 wherein R⁴ is the same as described above. g is an integer of 1 to 9, preferably an integer of 1 to 4, and h is an integer of 1 to 8, preferably an integer of 1 to 3.

In the above formula (3), a is 0 or 1. When a is 1, the total number of carbon atoms in the alkylene group of R³ is preferably 2 to 30. When a is 0, Z is preferably a single bond.

Specific examples of Y include the following groups.

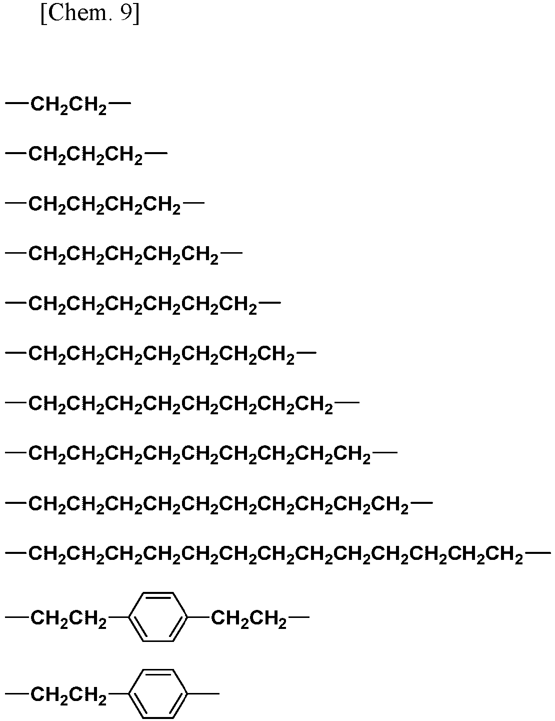

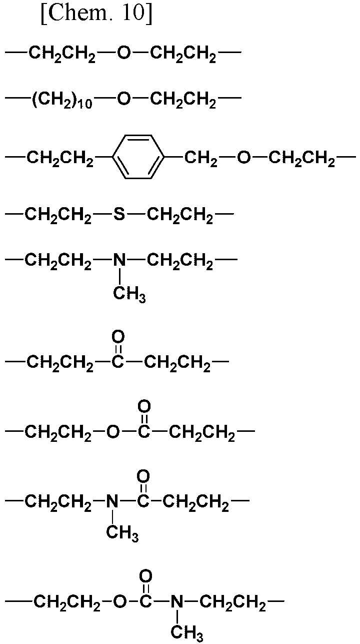

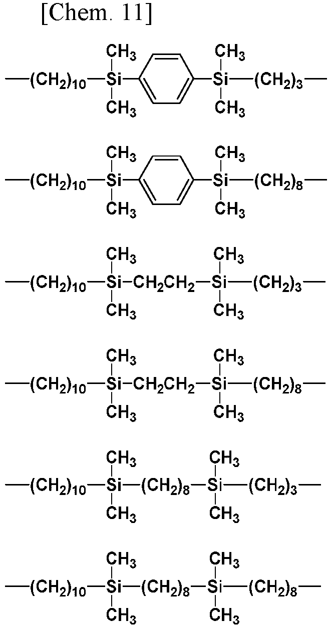

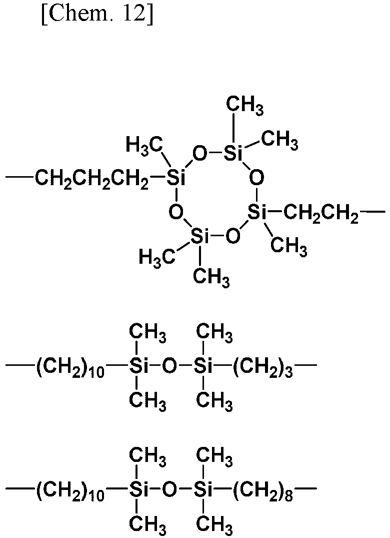

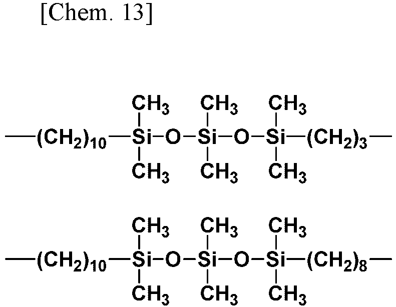

In the above formula (1), n is an integer of 1 to 3, q is an integer of 1 to 3, preferably n is 2 or 3, q is 2 or 3, more preferably n is 3, and q is 3.

Examples of the lipophilic group-containing (hydrolyzable) organosiloxane compound represented by the above formula (1) include compounds represented by the following formulas.

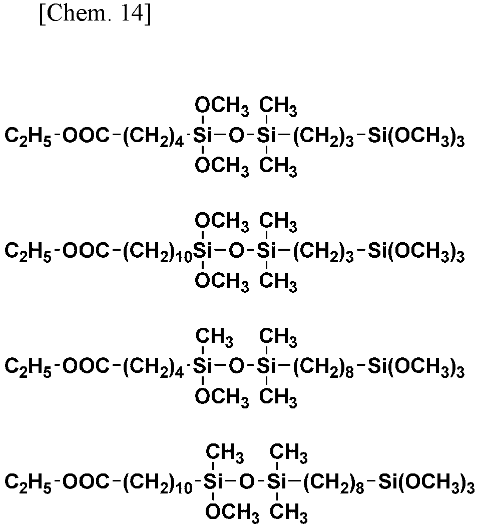

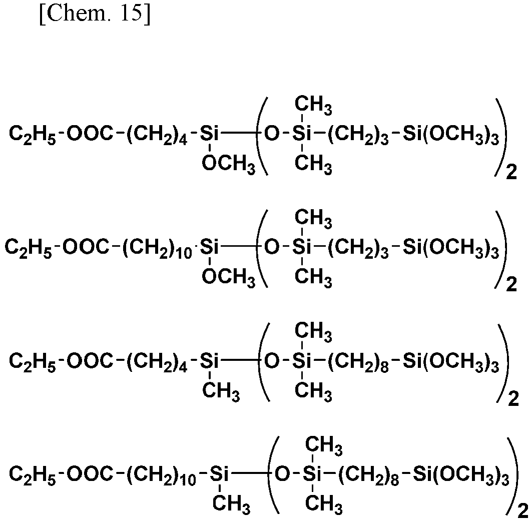

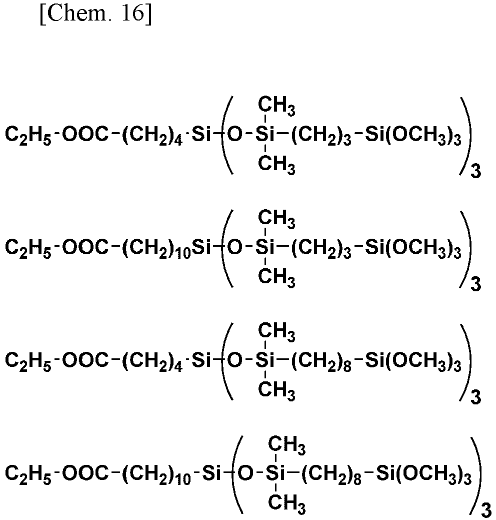

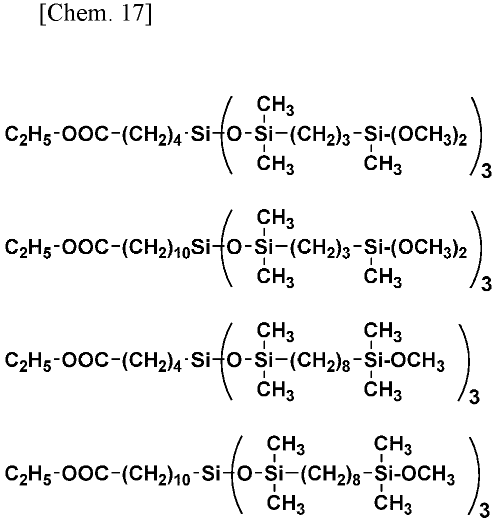

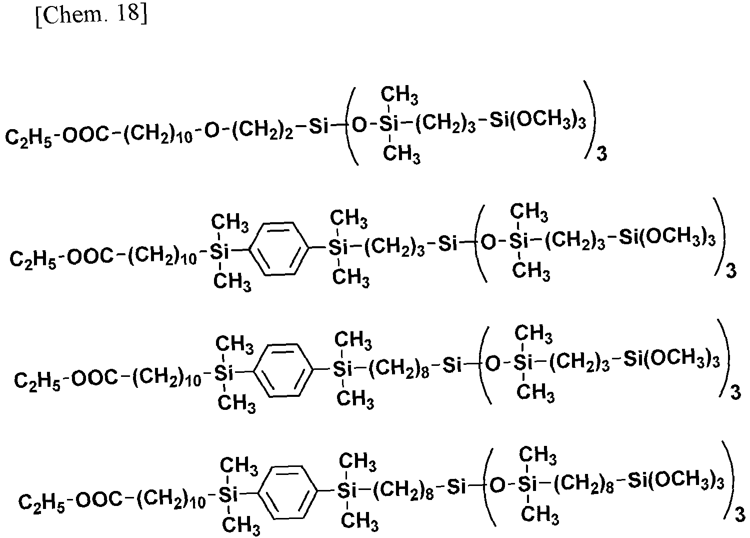

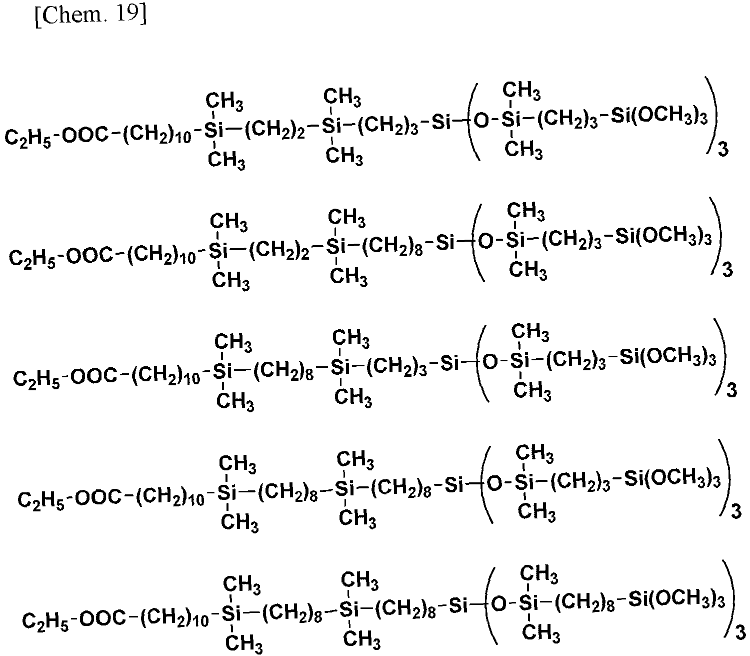

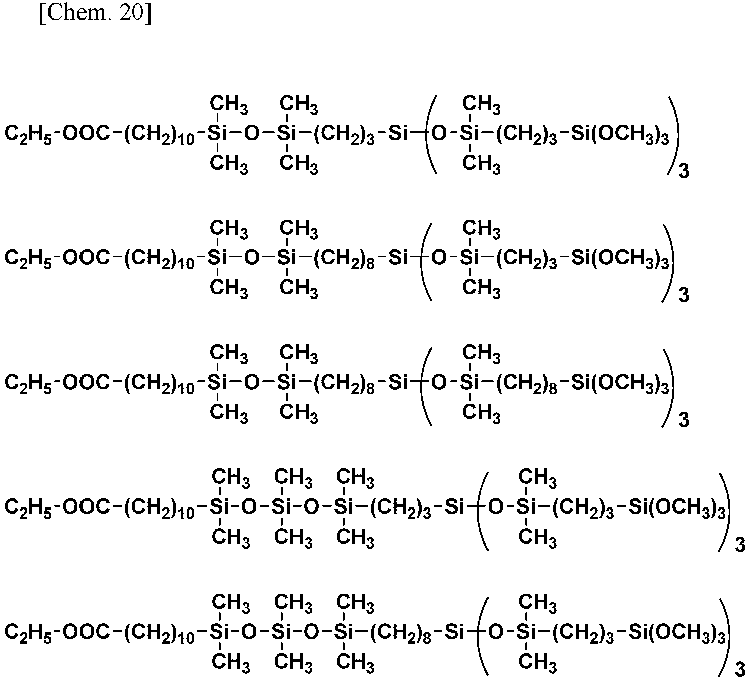

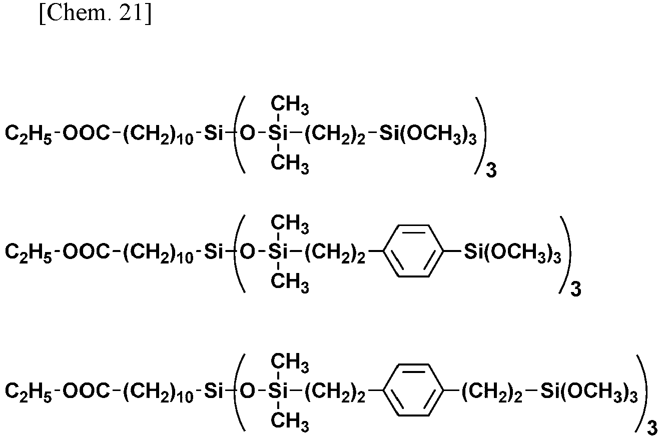

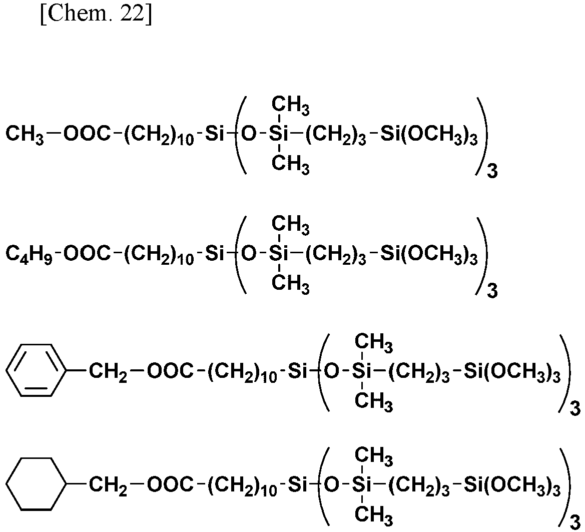

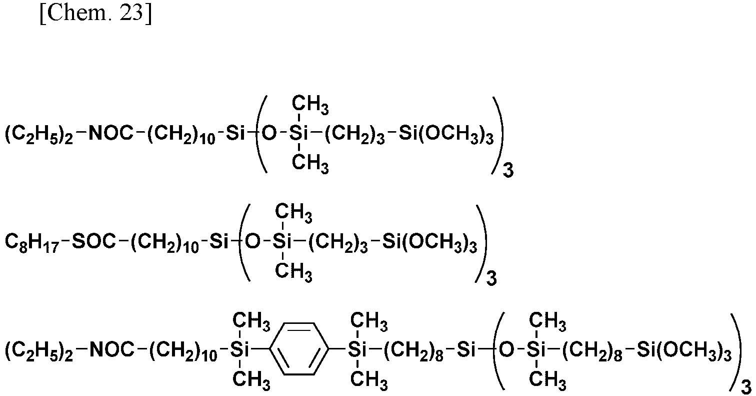

The lipophilic group-containing (hydrolyzable) organosiloxane compound represented by the above formula (1) is more preferably a compound represented by the following general formula (2): 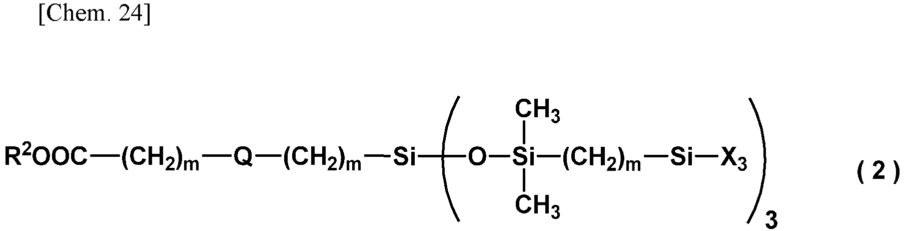 wherein R² is an alkyl group having 1 to 20 carbon atoms, an aryl group having 6 to 20 carbon atoms, or an aralkyl group having 7 to 20 carbon atoms, Q is a single bond or a divalent group selected from a silalkylene group, a silarylene group, and a linear, branched, or cyclic divalent organo (poly) siloxane residue having 2 to 10 silicon atoms, m is independently an integer of 1 to 20, preferably an integer of 2 to 10, and X is the same as described above.

In the above formula (2), R² is an alkyl group having 1 to 20 carbon atoms, an aryl group having 6 to 20 carbon atoms, or an aralkyl group having 7 to 20 carbon atoms, and preferably a linear alkyl group having 1 to 8 carbon atoms.

Specific examples of R² include alkyl groups such as a methyl group, an ethyl group, a propyl group, a butyl group, a pentyl group, a hexyl group, a heptyl group, an octyl group, a nonyl group, a decyl group, a dodecyl group, a tetradecyl group, a hexadecyl group, an octadecyl group, an isopropyl group, an isobutyl group, a tert-butyl group, a neopentyl group, a thexyl group, a cyclopentyl group, a cyclohexyl group, a cycloheptyl group, a cyclohexylmethyl group, a norbornyl group, a decahydronaphthyl group, an adamantyl group, and an adamantylmethyl group, aryl groups such as a phenyl group, a tolyl group, and a naphthyl group, and aralkyl groups such as a benzyl group, a phenylethyl group, and a phenylpropyl group. R² is preferably a methyl group, an ethyl group, a butyl group, or an octyl group.

In the above formula (2), Q is a single bond or a divalent group selected from a silalkylene group, a silarylene group, and a linear, branched, or cyclic divalent organo (poly) siloxane residue having 2 to 10 silicon atoms, preferably 2 to 5 silicon atoms.

Here, examples of the silalkylene group, the silarylene group, and the linear, branched, or cyclic divalent organo (poly) siloxane residue having 2 to 10 silicon atoms, preferably 2 to 5 silicon atoms can be the same as those exemplified as the silalkylene group, the silarylene group, or the linear, branched, or cyclic divalent organo (poly) siloxane residue having 2 to 10 silicon atoms, preferably 2 to 5 silicon atoms in Z of the formula (3) described above.

m is independently an integer of 1 to 20, preferably an integer of 2 to 10. When Q is a single bond, the sum of the two m's on both sides of Q is preferably an integer of 2 to 20, particularly preferably an integer of 2 to 10.

Examples of the lipophilic group-containing (hydrolyzable) organosiloxane compound represented by the above formula (2) include compounds represented by the following formulas.

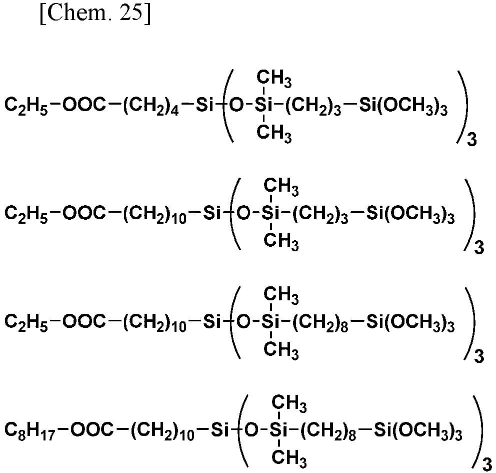

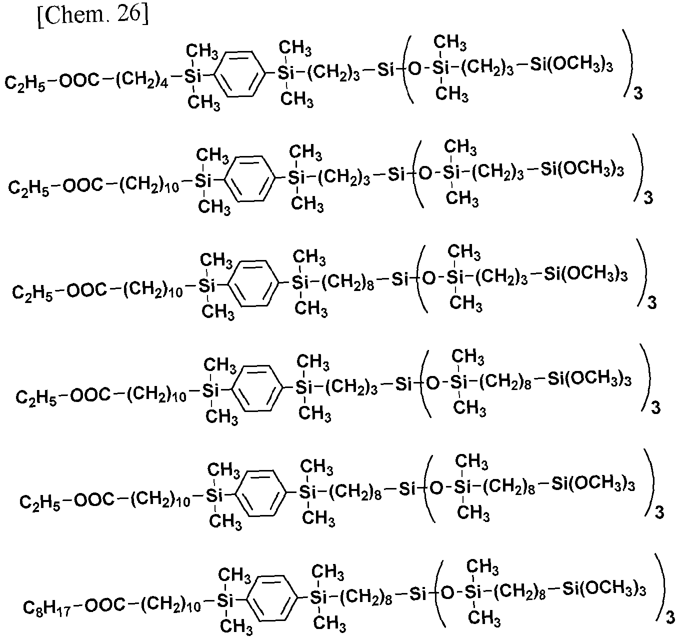

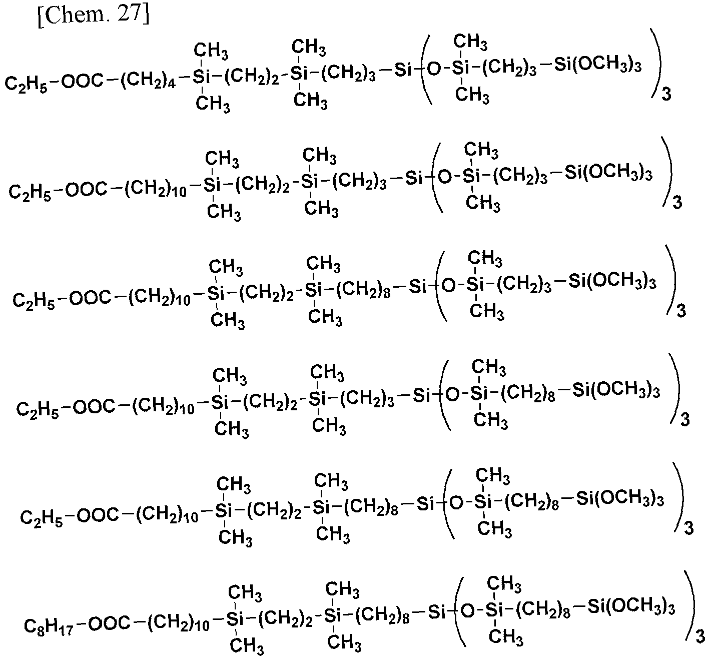

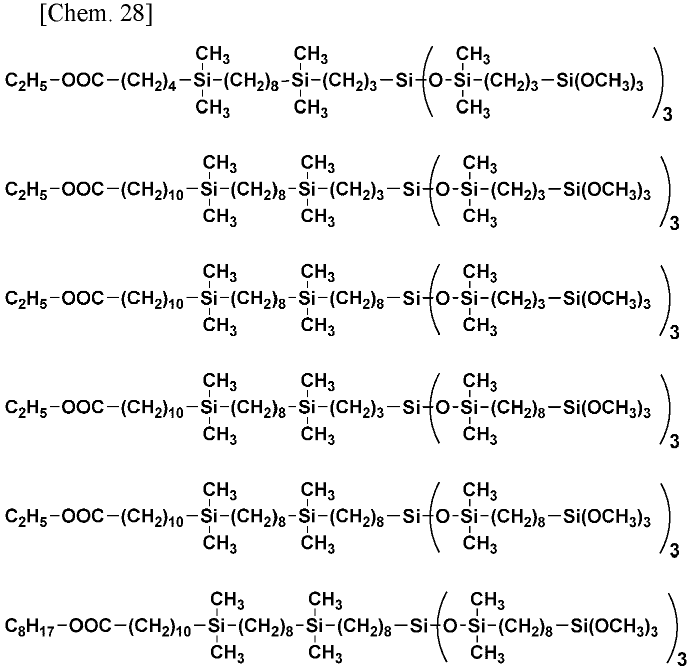

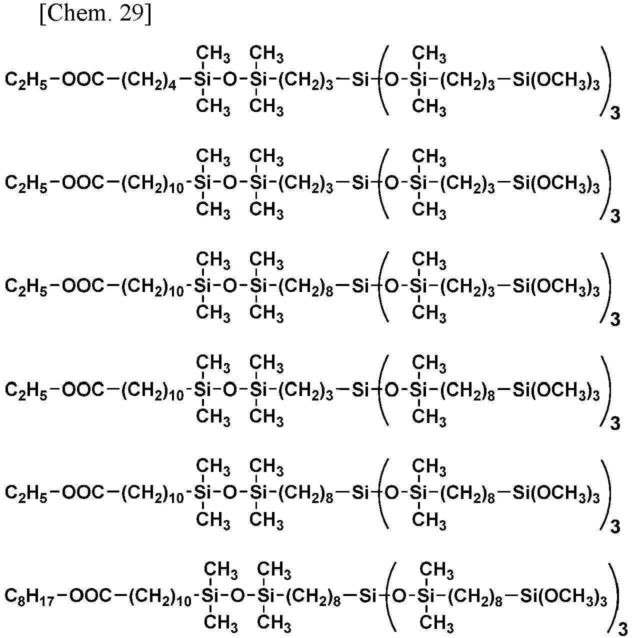

Examples of a method of preparing the lipophilic group-containing (hydrolyzable) organosiloxane compound represented by the above formula (1), particularly, the lipophilic group-containing hydrolyzable organosiloxane compound in which R is a methyl group include the following methods.

A siloxane compound (organohydrogensiloxane compound) having A in the above formula (1) and a plurality of SiH groups (hydrogen atoms bonded to silicon atoms) at opposite ends of the molecular chain is heated and stirred at a temperature of 40 to 120°C, preferably 60 to 100°C, and more preferably about 80°C, and a hydrosilylation reaction catalyst, for example, a toluene solution of chloroplatinic acid/vinylsiloxane complex is added. Subsequently, a silane compound having a hydrolyzable silyl group and an olefin moiety (for example, an alkenyl group) at opposite ends of the molecular chain is added dropwise, and aged at a temperature of 40 to 120°C, preferably 60 to 100°C, and more preferably about 80°C for 10 minutes to 12 hours, preferably 1 to 6 hours, and more preferably about 3 hours. The reaction mixture may be diluted with an organic solvent prior to the reaction.

Here, as the siloxane compound having A in the above formula (1) and a plurality of SiH groups at opposite ends of the molecular chain (organohydrogensiloxane compound), a siloxane compound represented by the following general formula (4) can be exemplified. 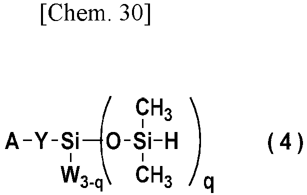 wherein A, Y, W, and q are the same as described above.

Specific examples of the siloxane compound represented by the formula (4) include organohydrogensiloxane compounds represented by the following general formulas (a) to (h). 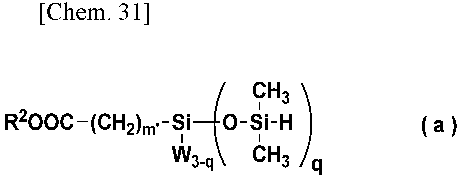 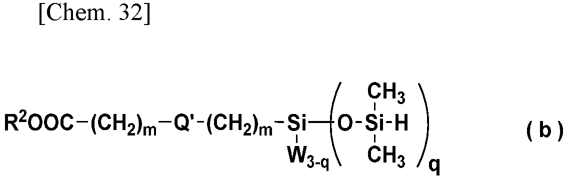 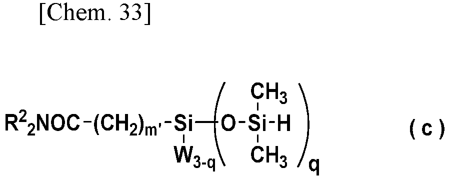 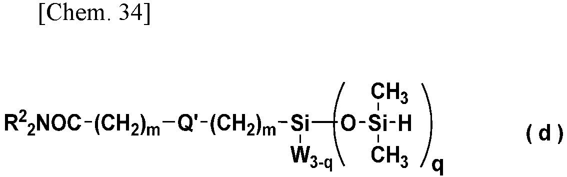 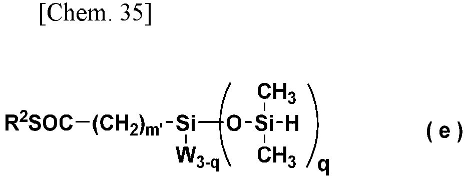 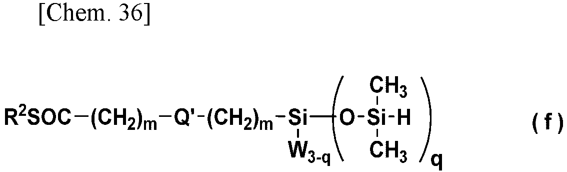 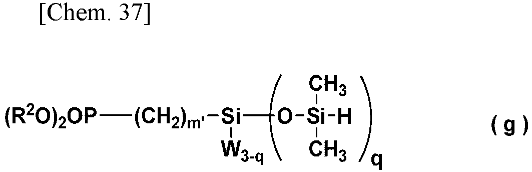 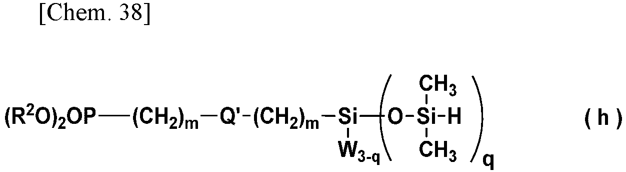 wherein R², W, m, and q are the same as described above. m' is an integer of 2 to 20, preferably an integer of 2 to 10, and Q' is a divalent group selected from a silalkylene group, a silarylene group, and a linear, branched, or cyclic divalent organo (poly) siloxane residue having 2 to 10 silicon atoms.

Specific examples of the organohydrogensiloxane compound represented by the formula (a) include those shown below.

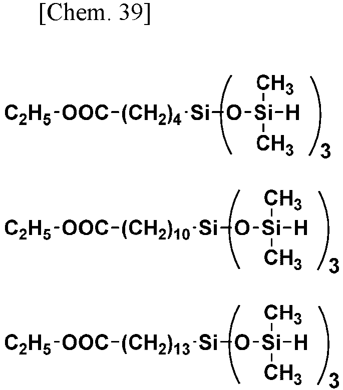

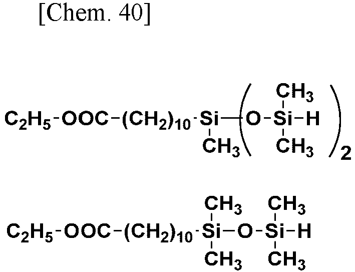

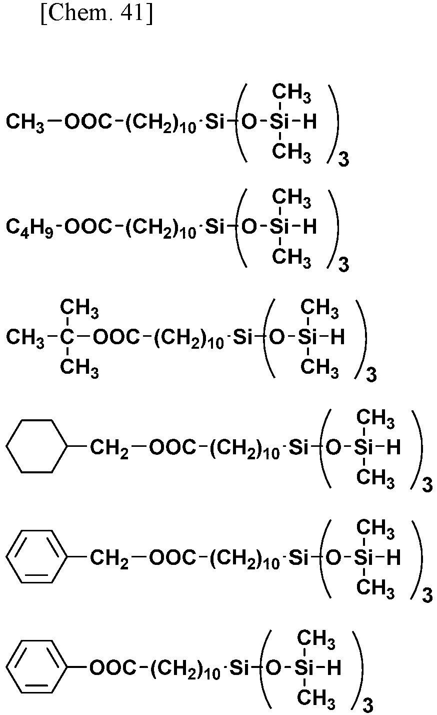

Specific examples of the organohydrogensiloxane compound represented by the formula (b) include those shown below.

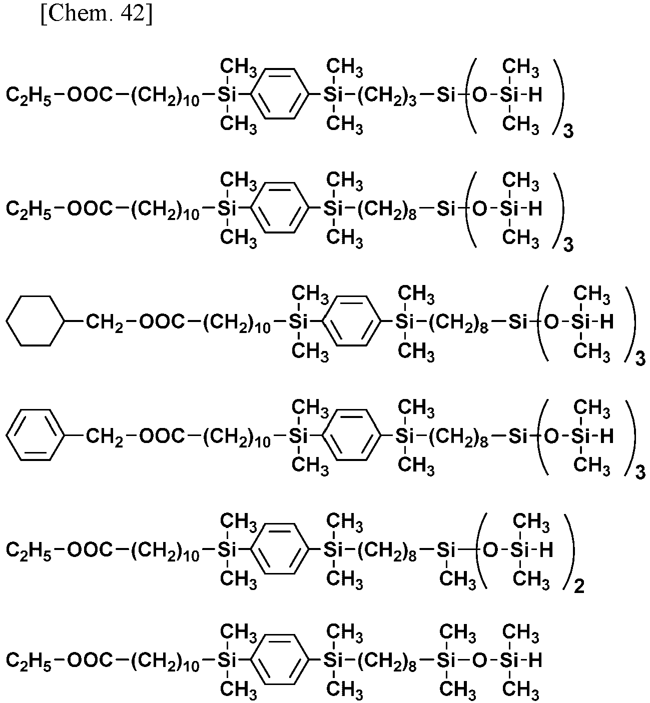

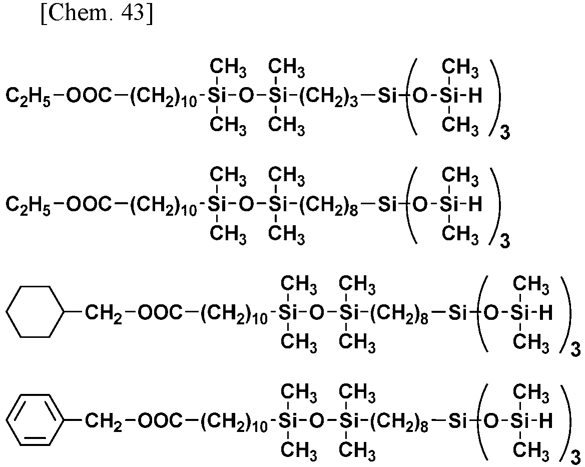

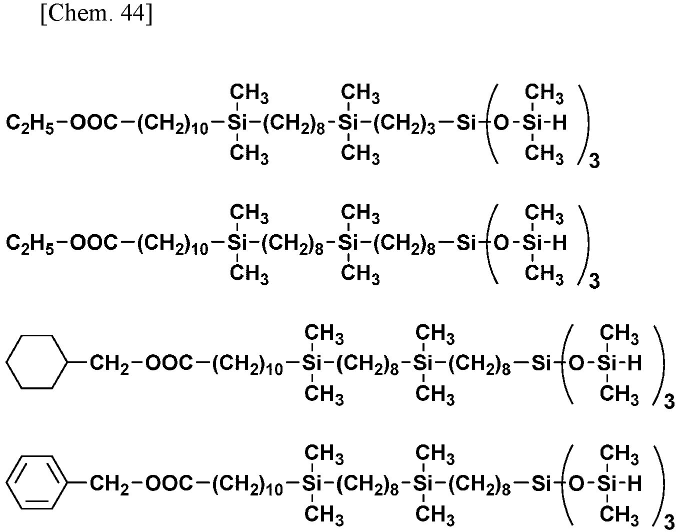

Specific examples of the organohydrogensiloxane compound represented by the formula (c) include those shown below.

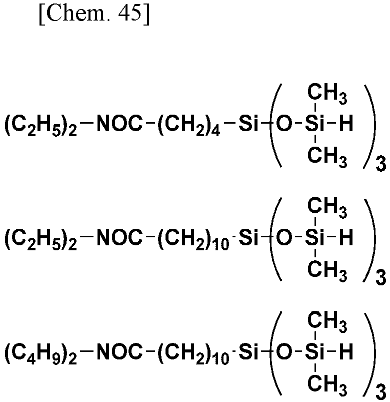

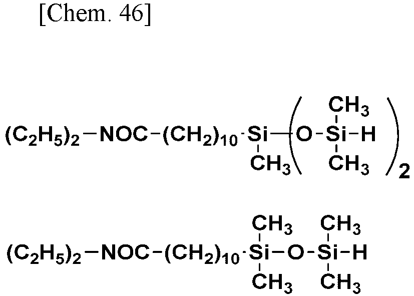

Specific examples of the organohydrogensiloxane compound represented by the formula (d) include those shown below.

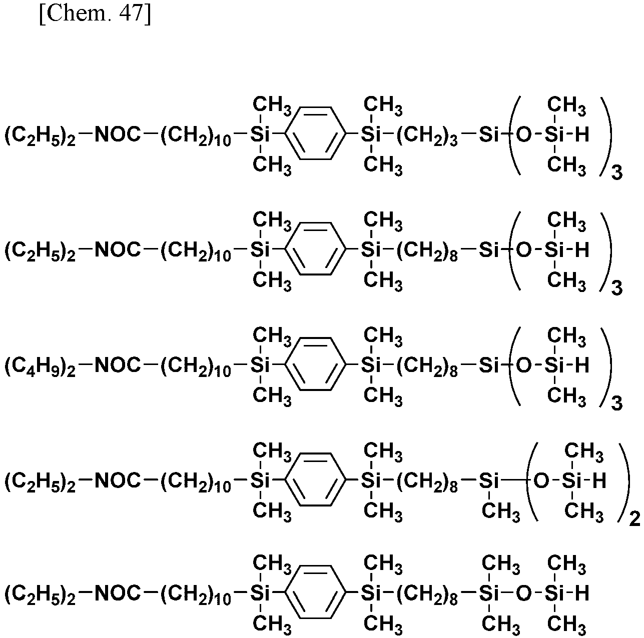

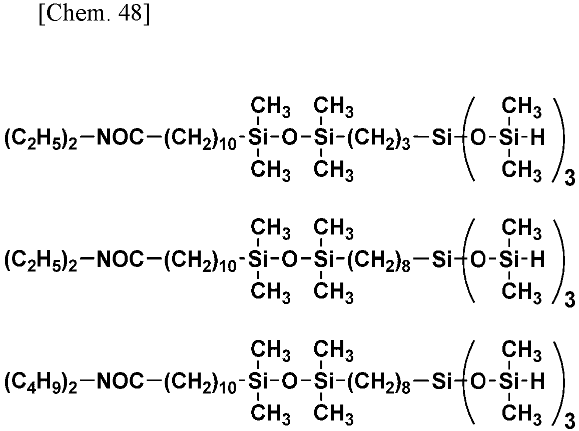

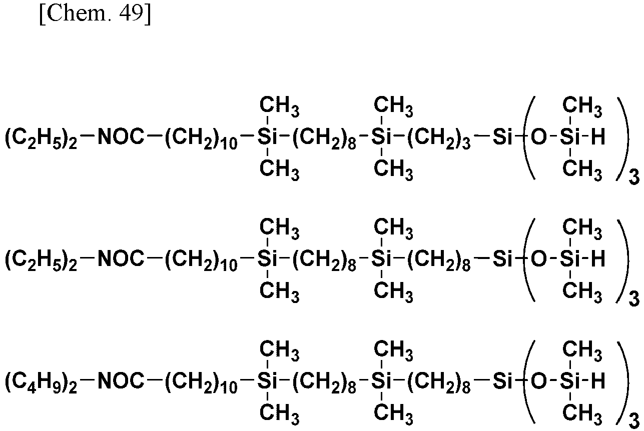

Specific examples of the organohydrogensiloxane compound represented by the formula (e) include those shown below.

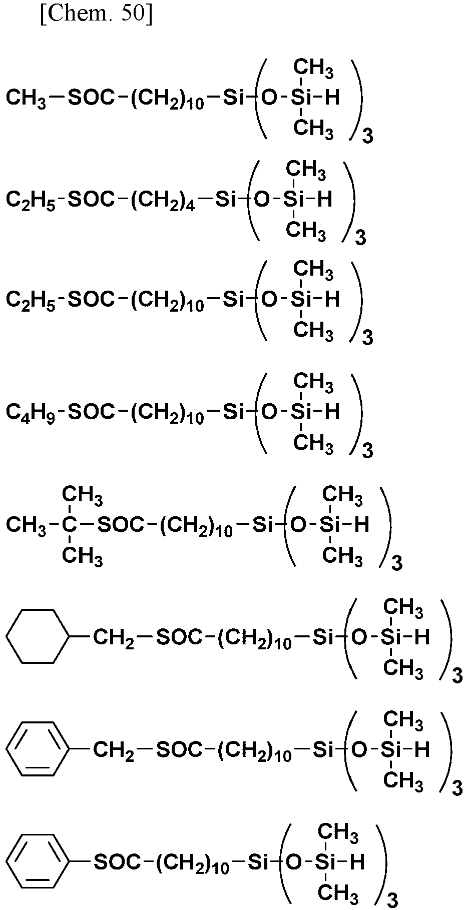

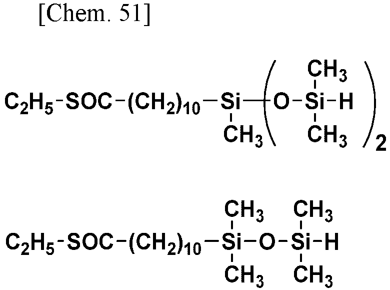

Specific examples of the organohydrogensiloxane compound represented by the formula (f) include those shown below.

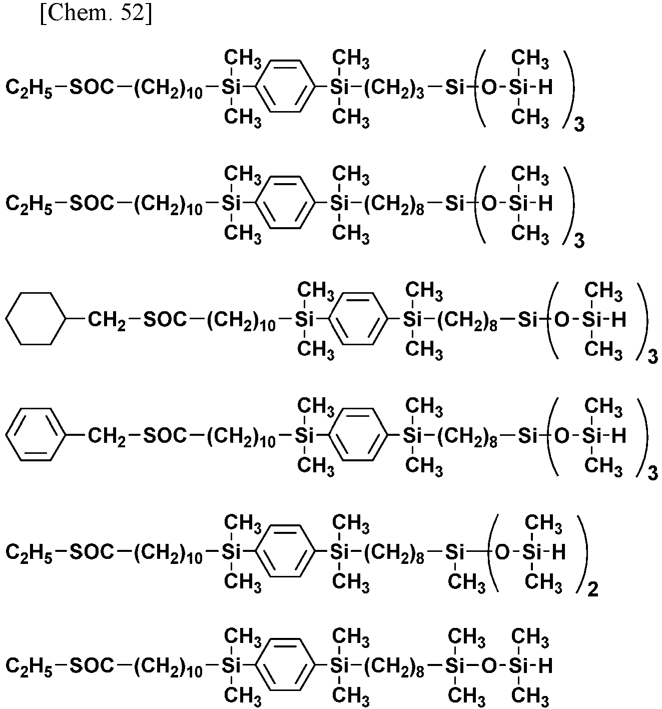

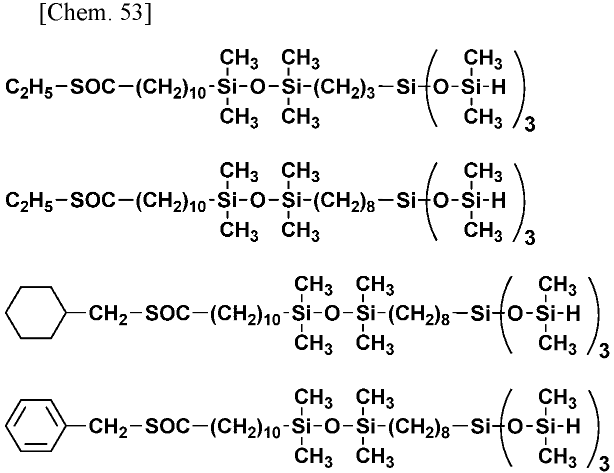

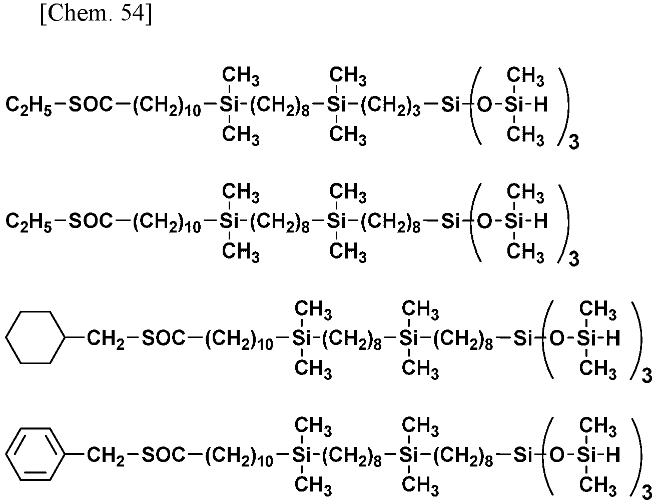

Specific examples of the organohydrogensiloxane compound represented by the formula (g) include those shown below.

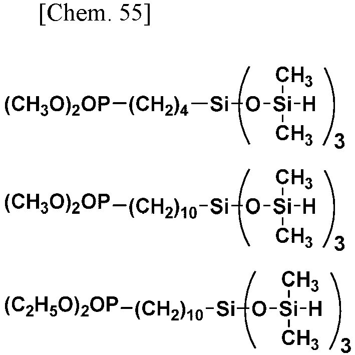

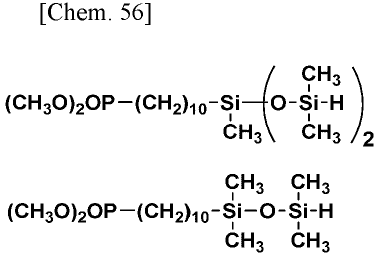

Specific examples of the organohydrogensiloxane compound represented by the formula (h) include those shown below.

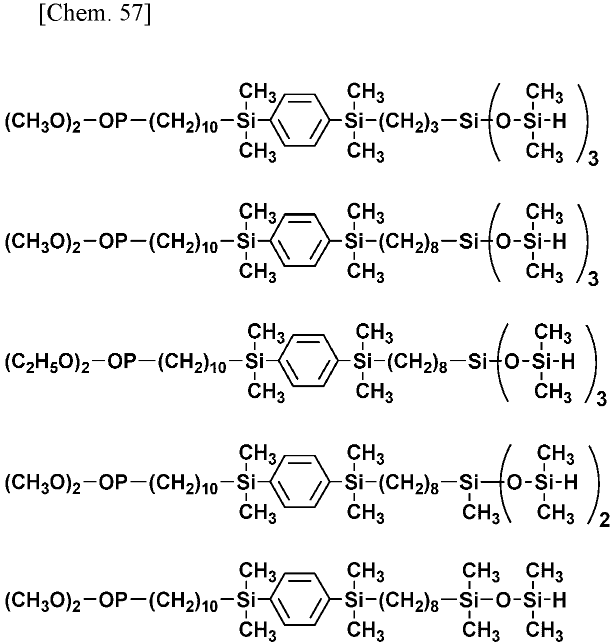

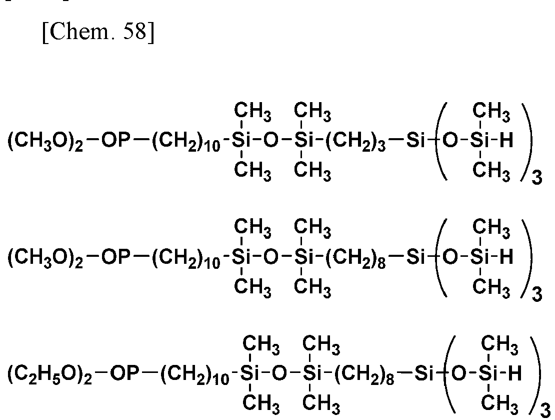

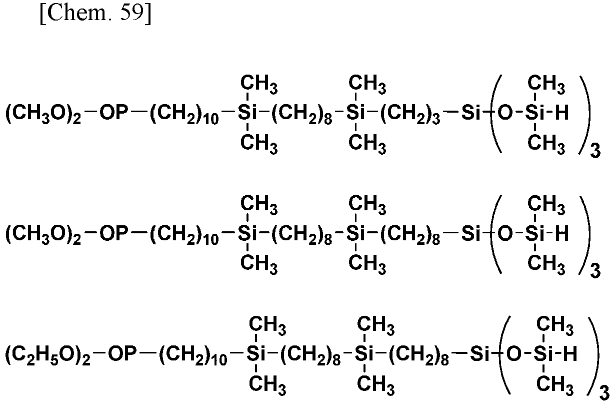

As a method of preparing the organohydrogensiloxane compound represented by the above formula (4), particularly the formulas (a) to (h), a silane or siloxane compound having A in the above formula (1) and a hydrolyzable silyl group at opposite ends of the molecular chain is stirred at a temperature of -20 to 40°C, preferably -10 to 20°C, and more preferably 0 to 10°C, tetraorganodisiloxane (1,3-dihydro-1,1,3,3-tetraorganodisiloxane) such as tetramethyldisiloxane (1,3-dihydro-1,1,3,3-tetramethyldisiloxane) and a co-hydrolysis reaction catalyst such as hydrochloric acid or sulfuric acid are added dropwise, and the mixture is aged at a temperature of -20 to 40°C, preferably -10 to 20°C, and more preferably 0 to 10°C, for 10 minutes to 12 hours, and preferably 1 to 6 hours. The reaction mixture may be diluted with an organic solvent prior to the reaction.

Here, examples of the silane or siloxane compound having A in the above formula (1) and a hydrolyzable silyl group at opposite ends of the molecular chain include a silane or siloxane compound represented by the following general formula (5). 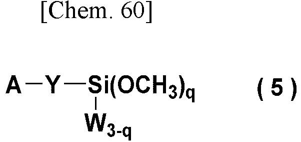 wherein A, Y, W, and q are the same as described above.

Specific examples of the silane or siloxane compound represented by the formula (5) include those shown below.

[Chem. 61] C₂H₅-OOC-(CH₂)₄-Si(OCH₃)₃ C₂H₅-OOC-(CH₂)₁₀-Si(OCH₃)₃ C₂H₅-OOC-(CH₂)₁₃-Si(OCH₃)₃

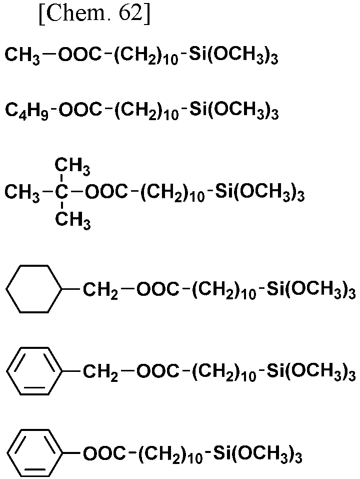

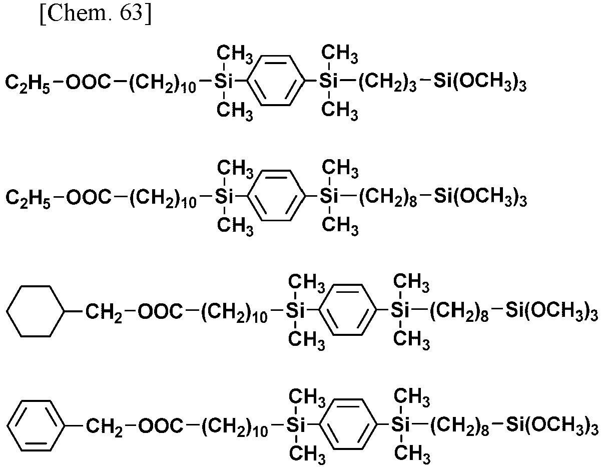

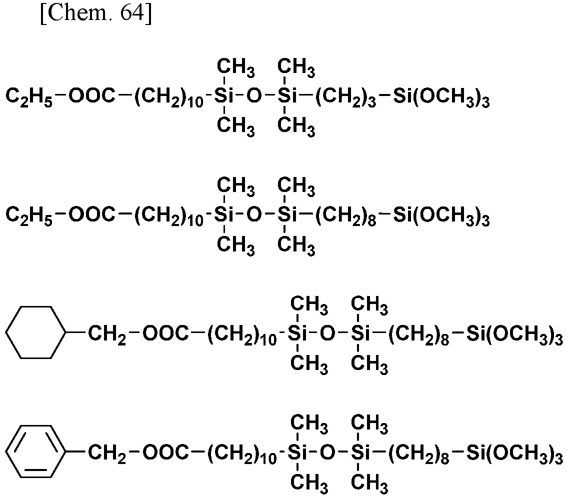

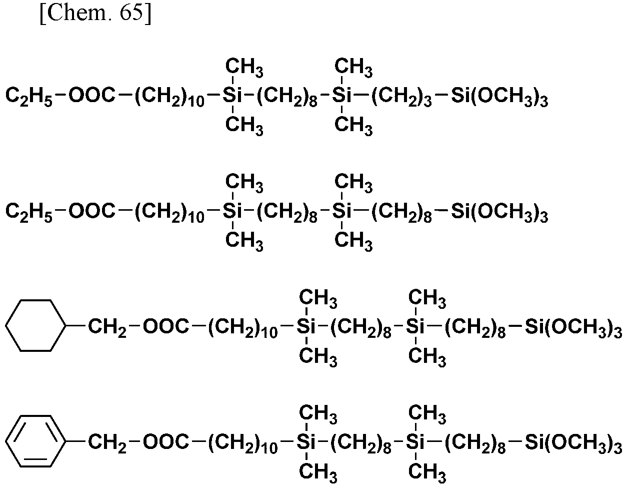

[Chem. 66] (C₂H₅)₂-NOC-(CH₂)₄-Si(OCH₃)₃ (C₂H₅)₂-NOC-(CH₂)₁₀-Si(OCH₃)₃ (C₄H₉)₂-NOC-(CH₂)₁₀-Si(OCH₃)₃

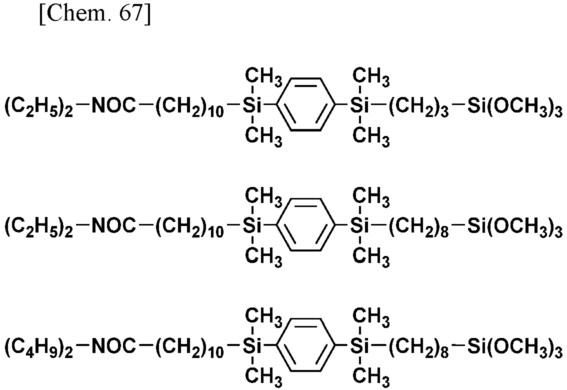

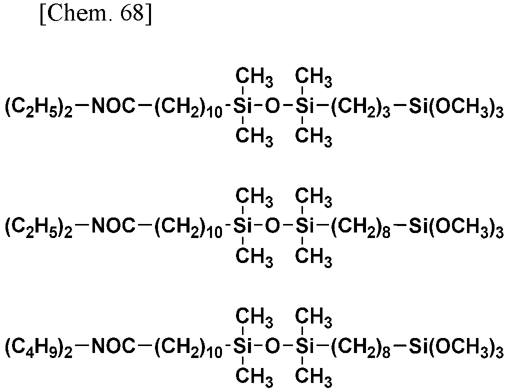

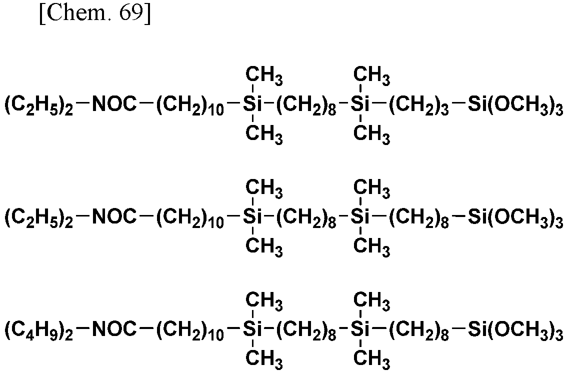

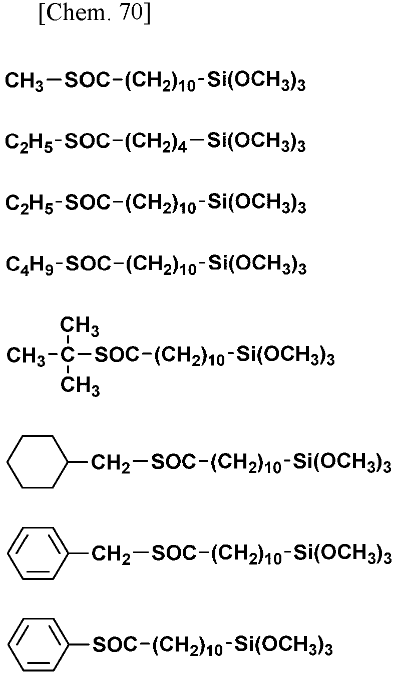

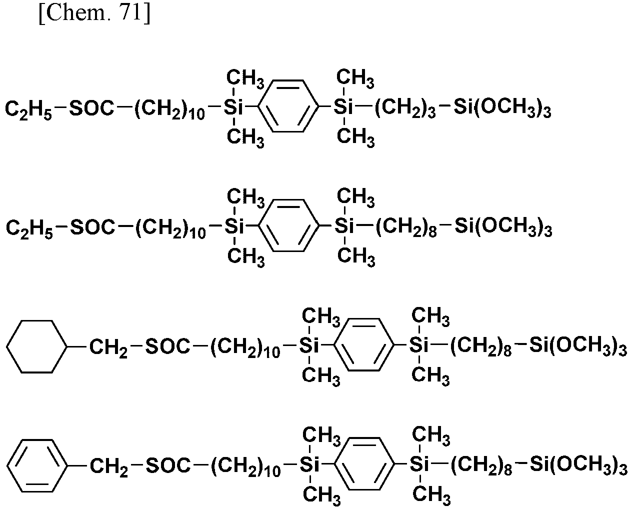

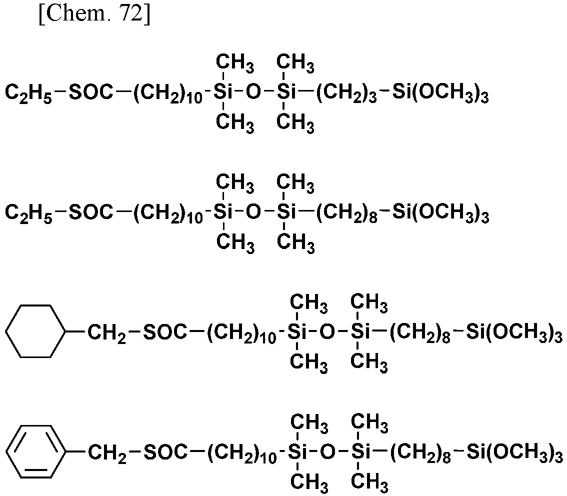

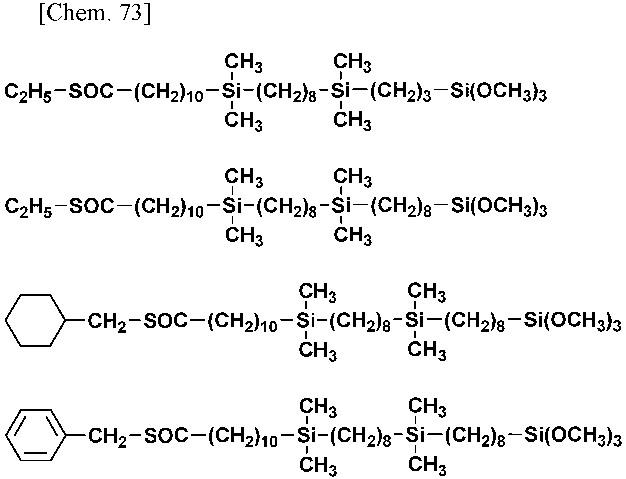

[Chem. 74] (CH₃O)₂OP-(CH₂)₄-Si(OCH₃)₃ (CH₃O)₂OP-(CH₂)₁₀-Si(OCH₃)₃ (C₂H₅O)₂OP-(CH₂)₁₀-Si(OCH₃)₃

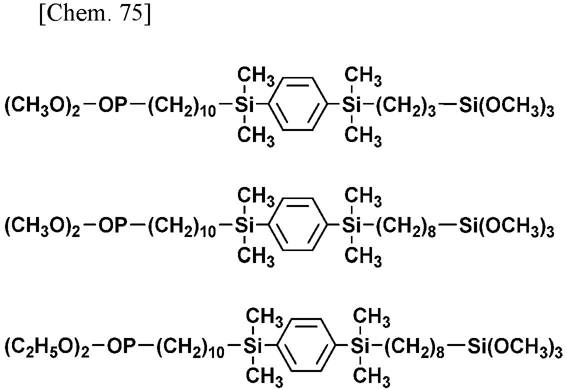

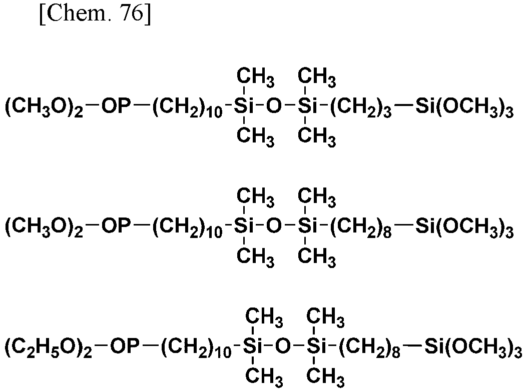

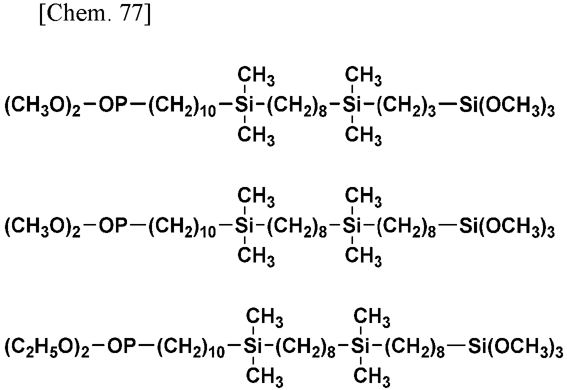

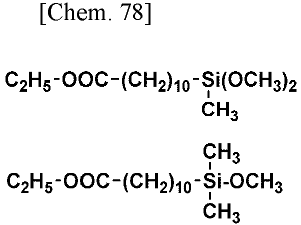

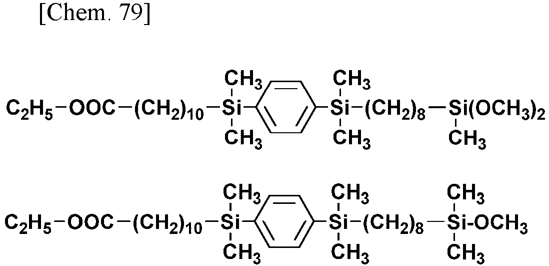

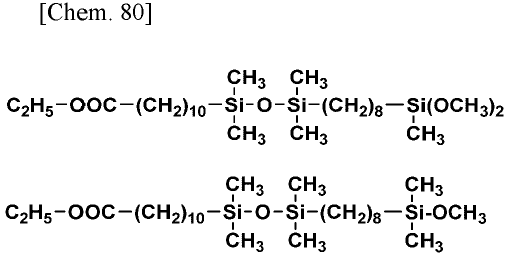

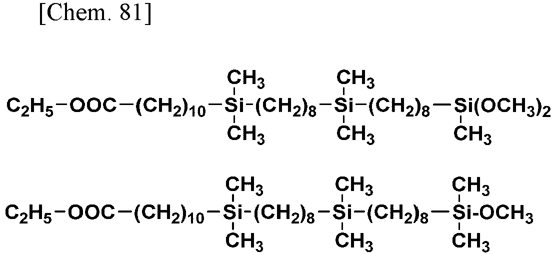

As a method of preparing a silane or siloxane compound having A in the above formula (1) and a hydrolyzable silyl group at opposite ends of the molecular chain represented by the formula (5), particularly a silane or siloxane compound in which Y is an alkylene group containing a divalent group selected from a silalkylene group, a silarylene group, and linear, branched, or cyclic divalent organo (poly) siloxane residues having 2 to 10 silicon atoms in the formula (5), a compound having two SiH groups at the molecular chain terminal, for example, 1,4-bis (dimethylsilyl) benzene, is heated and stirred at a temperature of 40 to 120°C, preferably 60 to 100°C, and more preferably about 80°C, and a hydrosilylation reaction catalyst, for example, a toluene solution of platinic chloride/vinylsiloxane complex is added. Subsequently, a compound having A in the above formula (1) and an olefin moiety (for example, an alkenyl group) at opposite ends of the molecular chain is slowly added dropwise over time, and aged at a temperature of 40 to 120°C, preferably 60 to 100°C, and more preferably about 80°C for 10 minutes to 12 hours, and preferably 1 to 6 hours, whereby a silane or siloxane compound having A in the above formula (1) and a terminal SiH group at opposite ends of the molecular chain can be obtained. The reaction mixture may be diluted with an organic solvent prior to the reaction.

Subsequently, the silane or siloxane compound having A in the above formula (1) and a terminal SiH group at opposite ends of the molecular chain obtained above is heated and stirred at a temperature of 40 to 120°C, preferably 60 to 100°C, and more preferably about 80°C, and a hydrosilylation reaction catalyst, for example, a toluene solution of chloroplatinic acid/vinylsiloxane complex is added. Subsequently, a silane compound having a hydrolyzable silyl group and an olefin moiety (for example, an alkenyl group) at opposite ends of the molecular chain is added dropwise, and aged at a temperature of 40 to 120°C, preferably 60 to 100°C, and more preferably about 80°C for 10 minutes to 12 hours, preferably 1 to 6 hours, and more preferably 3 to 6 hours. The reaction mixture may be diluted with an organic solvent prior to the reaction.

Here, specific examples of the compound having two SiH groups at the molecular chain terminal include those shown below.

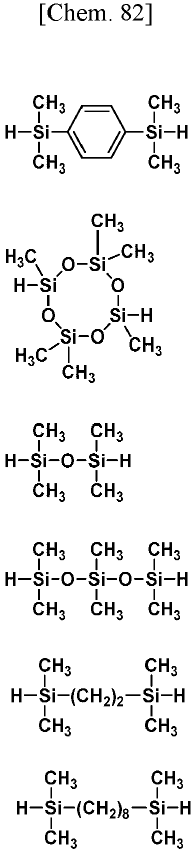

Specific examples of the compound having A in the above formula (1) and an olefin moiety at opposite ends of the molecular chain include those shown below.

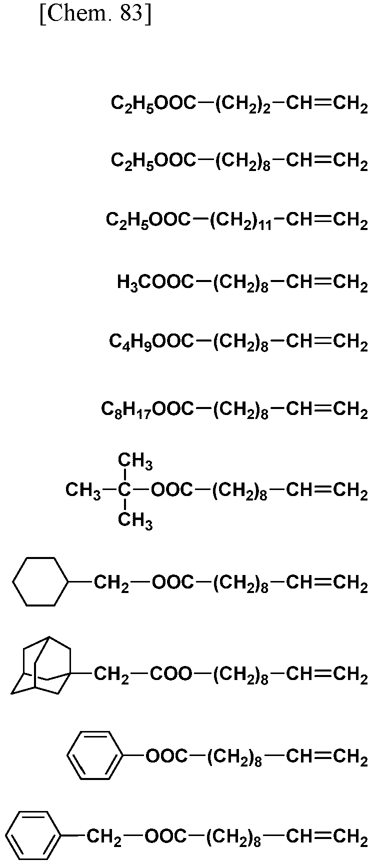

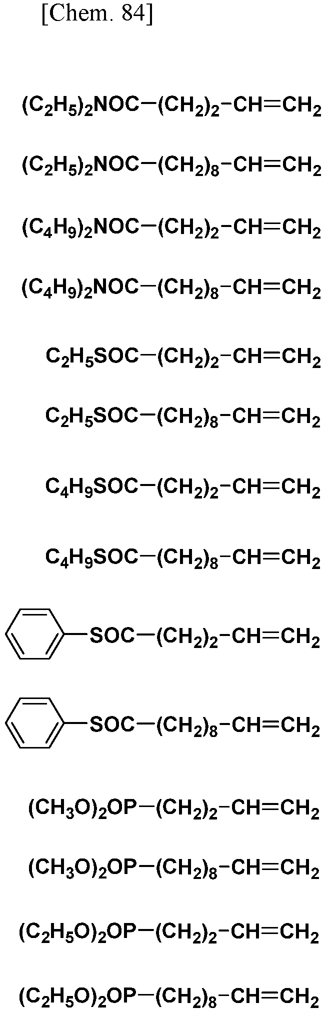

A use amount of the compound having A in the above formula (1) and an olefin moiety at opposite ends of the molecular chain can be 0.05 to 0.5 equivalents, more preferably 0.1 to 0.4 equivalents, and still more preferably 0.2 equivalents per 1 equivalent of the compound having two SiH groups at the molecular chain terminal.

In the preparation of the silane or siloxane compound represented by the above formula (5), examples of the hydrosilylation reaction catalyst include platinum group metal based catalysts such as platinum black, chloroplatinic acid, alcohol-modified chloroplatinic acid, complexes of chloroplatinic acid with olefins, aldehydes, vinylsiloxanes, or acetylene alcohols, tetrakis(triphenylphosphine)palladium, and chlorotris(triphenylphosphine)rhodium. Platinum based compounds such as vinylsiloxane coordination compounds are preferred.

A use amount of the hydrosilylation reaction catalyst used for the reaction between the compound having two SiH groups at the molecular chain terminal and the compound having A in the above formula (1) and an olefin moiety at opposite ends of the molecular chain is 0.1 to 100 ppm, more preferably 0.2 to 50 ppm in terms of transition metal (weight) with respect to the total weight of the compound having two SiH groups at the molecular chain terminal and the compound having A in the above formula (1) and an olefin moiety at opposite ends of the molecular chain.

In the preparation of the silane or siloxane compound represented by the above formula (5), an organic solvent may be used. Examples of the organic solvent to be used include ether-based solvents (dibutyl ether, diethyl ether, tetrahydrofuran, and the like) and hydrocarbon-based solvents (petroleum benzine, toluene, xylene, and the like). Among them, toluene is particularly preferable.

A use amount of the organic solvent used for the reaction between the compound having two SiH groups at the molecular chain terminal and the compound having A in the above formula (1) and an olefin moiety at opposite ends of the molecular chain is 10 to 300 parts by weight, preferably 50 to 150 parts by weight, more preferably about 100 parts by weight, per 100 parts by weight of the compound having A in the above formula (1) and an olefin moiety at opposite ends of the molecular chain.

Subsequently, the reaction is stopped, and the organic solvent is distilled off to obtain a silane or siloxane compound having A in the above formula (1) and a terminal SiH group at opposite ends of the molecular chain.

In the preparation of the silane or siloxane compound represented by the above formula (5), specific examples of the silane compound having a hydrolyzable silyl group and an olefin moiety (for example, an alkenyl group) at opposite ends of the molecular chain include those shown below.

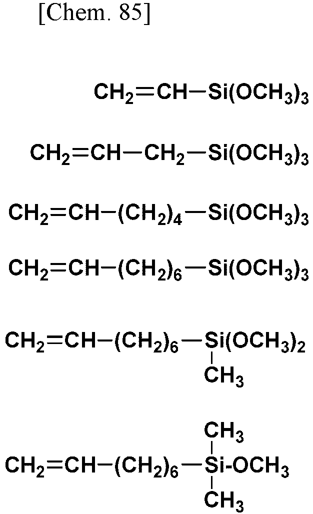

A use amount of the silane compound having a hydrolyzable silyl group and an olefin moiety at opposite ends of the molecular chain can be 1 to 5 equivalents, more preferably 1.1 to 2.5 equivalents per 1 equivalent of the silane or siloxane compound having A in the above formula (1) and a terminal SiH group at opposite ends of the molecular chain obtained above.

In the preparation of the silane or siloxane compound represented by the above formula (5), examples of the hydrosilylation reaction catalyst used for the reaction between the silane or siloxane compound having A in the above formula (1) and a terminal SiH group at opposite ends of the molecular chain described above and the silane compound having a hydrolyzable silyl group and an olefin moiety at opposite ends of the molecular chain, include those similar to the above, and the use amount of the hydrosilylation reaction catalyst is 0.1 to 100 ppm, more preferably 0.2 to 50 ppm in terms of transition metal (weight) with respect to the total weight of the silane or siloxane compound having A in the above formula (1) and a terminal SiH group at opposite ends of the molecular chain and the silane compound having a hydrolyzable silyl group and an olefin moiety at opposite ends of the molecular chain.

In the preparation of the silane or siloxane compound represented by the above formula (5), when an organic solvent is used for the reaction between the silane or siloxane compound having A in the above formula (1) and a terminal SiH group at opposite ends of the molecular chain described above and the silane compound having a hydrolyzable silyl group and an olefin moiety at opposite ends of the molecular chain, the same organic solvent as described above can be exemplified, and the use amount of the organic solvent can be 10 to 300 parts by weight, preferably 50 to 150 parts by weight, and more preferably about 100 parts by weight, per 100 parts by weight of the silane or siloxane compound having A in the above formula (1) and a terminal SiH group at opposite ends of the molecular chain described above.

Subsequently, the reaction is stopped, and the organic solvent and the unreacted component are distilled off, whereby the silane or siloxane compound represented by the above formula (5), in particular, a silane or siloxane compound in which Y is an alkylene group containing a divalent group selected from a silalkylene group, a silarylene group, and a linear, branched, or cyclic divalent organo (poly) siloxane residue having 2 to 10 silicon atoms in the formula (5) can be obtained.

As a method of preparing a silane or siloxane compound having A in the above formula (1) and a hydrolyzable silyl group at opposite ends of the molecular chain represented by the formula (5), particularly a silane or siloxane compound in which Y is an alkylene group in the formula (5), the compound having A in the above formula (1) and an olefin moiety (for example, an alkenyl group) at opposite ends of the molecular chain described above is heated and stirred at a temperature of 40 to 120°C, preferably 60 to 100°C, and more preferably about 80°C, and a hydrosilylation reaction catalyst, for example, a toluene solution of platinic chloride/vinylsiloxane complex is added. Subsequently, a silane compound having a hydrolyzable silyl group and a SiH group at opposite ends of the molecular chain is slowly added dropwise over time, and aged at a temperature of 40 to 120°C, preferably 60 to 100°C, and more preferably about 80°C for 10 minutes to 12 hours, preferably 1 to 6 hours, and more preferably 1 to 3 hours, whereby a silane or siloxane compound having A in the above formula (1) and a hydrolyzable silyl group, particularly a silane or siloxane compound in which Y is an alkylene group in the formula (5) can be obtained. The reaction mixture may be diluted with an organic solvent prior to the reaction.

Here, specific examples of the silane compound having a hydrolyzable silyl group and a SiH group at opposite ends of the molecular chain include those shown below.

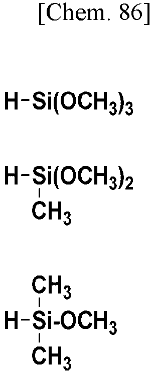

The use amount of the compound having A in the above formula (1) and an olefin moiety (for example, an alkenyl group) at opposite ends of the molecular chain can be 0.2 to 1 equivalents, and more preferably 0.4 to 1 equivalents per 1 equivalent of a silane compound having a hydrolyzable silyl group and a SiH group at opposite ends of the molecular chain.

In the preparation of the silane or siloxane compound in which Y is an alkylene group in the above formula (5), the same hydrosilylation reaction catalyst as described above can be exemplified, and the use amount of the hydrosilylation reaction catalyst is 0.1 to 100 ppm, more preferably 0.2 to 50 ppm in terms of transition metal (weight) with respect to the total weight of the compound having A in the above formula (1) and an olefin moiety at opposite ends of the molecular chain and the silane compound having a hydrolyzable silyl group and a SiH group at opposite ends of the molecular chain.

When an organic solvent is used in the preparation of the silane or siloxane compound in which Y is an alkylene group in the above formula (5), the same organic solvent as described above can be exemplified, and the use amount of the organic solvent can be 10 to 300 parts by weight, preferably 50 to 150 parts by weight, and more preferably about 100 parts by weight, per 100 parts by weight of the compound having A in the above formula (1) and an olefin moiety at opposite ends of the molecular chain.

In the preparation of the organohydrogensiloxane compound represented by the above formula (4), particularly the formulas (a) to (h), the use amount of the silane or siloxane compound having A in the above formula (1) and a hydrolyzable silyl group at opposite ends of the molecular chain represented by the formula (5) can be 0.2 to 0.6 equivalents, more preferably 0.3 to 0.5 equivalents, and still more preferably 0.4 to 0.5 equivalents per 1 equivalent of tetraorganodisiloxane.

In the preparation of the organohydrogensiloxane compound represented by the above formula (4), particularly the formulas (a) to (h), examples of the co-hydrolysis reaction catalyst include an organotin compound (such as dibutyltin dimethoxide and dibutyltin dilaurate), an organotitanium compound (such as tetra-n-butyl titanate), an organic acid (such as acetic acid and methanesulfonic acid), and an inorganic acid (such as hydrochloric acid, sulfuric acid, and phosphoric acid). Among them, hydrochloric acid and sulfuric acid are preferable.

The use amount of the co-hydrolysis reaction catalyst can be 1 to 5 equivalents, more preferably 2 to 4 equivalents, and still more preferably 2 to 3 equivalents per 1 equivalent of the silane or siloxane compound having A in the above formula (1) and a hydrolyzable silyl group at opposite ends of the molecular chain.

In the preparation of the organohydrogensiloxane compound represented by the above formula (4), particularly the formulas (a) to (h), an organic solvent may be used. Examples of the organic solvent to be used include ether-based solvents (such as dibutyl ether, diethyl ether, and tetrahydrofuran), hydrocarbon-based solvents (such as petroleum benzine, toluene, and xylene), and fluorine-based solvents (such as perfluorohexane and 1,4-bis (trifluoromethyl) benzene). Among them, toluene and 1,4-bis (trifluoromethyl) benzene are particularly preferable.

The use amount of the organic solvent can be 10 to 300 parts by weight, and preferably 50 to 150 parts by weight, per 100 parts by weight of the silane or siloxane compound having A in the above formula (1) and a hydrolyzable silyl group at opposite ends of the molecular chain.

Subsequently, the reaction is stopped, and the organic solvent is distilled off to obtain the organohydrogensiloxane compound represented by the above formula (4), particularly the formulas (a) to (h).

In the preparation of the lipophilic group-containing (hydrolyzable) organosiloxane compound represented by the formula (1), specific examples of the silane compound having a hydrolyzable silyl group and an olefin moiety (for example, an alkenyl group) at opposite ends of the molecular chain include those shown below.

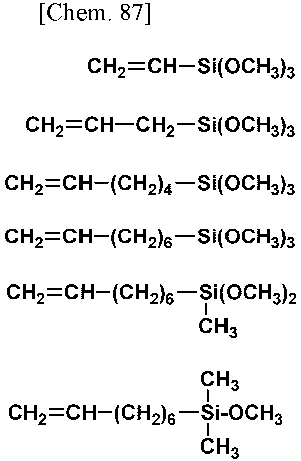

The use amount of the silane compound having a hydrolyzable silyl group and an olefin moiety at opposite ends of the molecular chain can be 3 to 5 equivalents, more preferably 3.5 to 4.5 equivalents, and still more preferably 4.0 to 4.3 equivalents per 1 equivalent of the organohydrogensiloxane compound having A in the above formula (1) and a plurality of SiH groups at opposite ends of the molecular chain.

In the preparation of the lipophilic group-containing (hydrolyzable) organosiloxane compound represented by the above formula (1), examples of the hydrosilylation reaction catalyst include platinum group metal based catalysts such as platinum black, chloroplatinic acid, alcohol-modified chloroplatinic acid, complexes of chloroplatinic acid with olefins, aldehydes, vinylsiloxanes, or acetylene alcohols, tetrakis(triphenylphosphine)palladium, and chlorotris(triphenylphosphine)rhodium. Platinum based compounds such as vinylsiloxane coordination compounds are preferred.

The use amount of the hydrosilylation reaction catalyst is 0.1 to 100 ppm, and more preferably 0.2 to 50 ppm in terms of transition metal (weight) with respect to the total weight of the organohydrogensiloxane compound having A in the above formula (1) and a plurality of SiH groups at opposite ends of the molecular chain and the silane compound having a hydrolyzable silyl group and an olefin moiety at opposite ends of the molecular chain.

In the preparation of the lipophilic group-containing (hydrolyzable) organosiloxane compound represented by the above formula (1), an organic solvent may be used. Examples of the organic solvent to be used include ether-based solvents (dibutyl ether, diethyl ether, tetrahydrofuran, and the like) and hydrocarbon-based solvents (petroleum benzine, toluene, xylene, and the like). Among them, toluene is particularly preferable.

The use amount of the organic solvent can be 10 to 300 parts by weight, preferably 50 to 150 parts by weight, and more preferably about 100 parts by weight, per 100 parts by weight of the organohydrogensiloxane compound having A in the above formula (1) and a plurality of SiH groups at opposite ends of the molecular chain.

Subsequently, the reaction is stopped, and the organic solvent and the unreacted component are distilled off to obtain the lipophilic group-containing (hydrolyzable) organosiloxane compound represented by the above formula (1).

For example, as the organohydrogensiloxane compound having A in the above formula (1) and a plurality of SiH groups at opposite ends of the molecular chain, a compound represented by the following formula is used: 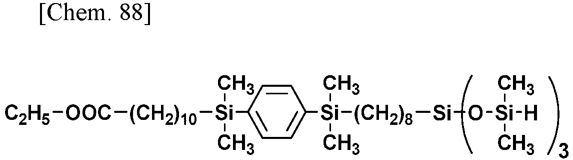 when a compound represented by the following formula is used as a silane compound having a hydrolyzable silyl group and an olefin moiety at opposite ends of the molecular chain:

[Chem. 89] **CH₂=CH-(CH₂)₆-Si(OCH₃)₃**

a siloxane compound represented by the following formula is obtained.

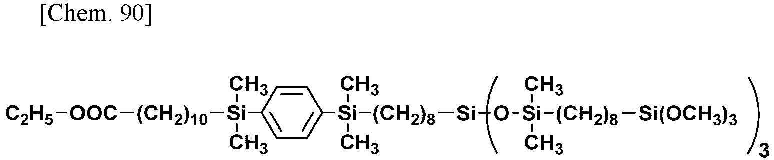

The lipophilic group-containing (hydrolyzable) organosiloxane compound represented by the general formula (1) obtained by the reaction as described above can be subjected to purification and isolation operations such as concentration, column purification, distillation, and extraction, and the reaction solution can be used as it is as a mixture containing the lipophilic group-containing (hydrolyzable) organosiloxane compound represented by the general formula (1) or further diluted with an organic solvent or the like.

Component (A) may contain a partial (hydrolysis) condensate obtained by condensing a hydroxyl group of the lipophilic group-containing (hydrolyzable) organosiloxane compound represented by the above formula (1) or a hydroxyl group obtained by partially hydrolyzing a terminal hydrolyzable group of the siloxane compound in advance by a known method.

The polyol ester of the component (B), which is the second essential component in the coating agent composition of the present invention, includes a condensate of a divalent to hexavalent alcohol and a saturated or unsaturated fatty acid having 3 to 22 carbon atoms, and may be one kind or a mixture of two or more kinds.

Specific preferred examples of the divalent to hexavalent alcohol include polyhydric alcohols such as neopentyl glycol, trimethylolethane, trimethylolpropane, glycerol, pentaerythritol, and dipentaerythritol. Such a polyol ester including a condensate of a polyhydric alcohol and a fatty acid having 3 to 22 carbon atoms is excellent in terms of availability and lubricity.

Specific preferable examples of the saturated or unsaturated fatty acid having 3 to 22 carbon atoms, preferably 6 to 18 carbon atoms include propionic acid, butyric acid, valeric acid, caproic acid, enanthic acid, caprylic acid, capric acid, undecylic acid, lauric acid, myristic acid, palmitic acid, 2-ethylhexanoic acid, oleic acid, and stearic acid. Such a polyol ester including a condensate of the saturated or unsaturated fatty acid having 3 to 22 carbon atoms and a polyhydric alcohol is excellent in terms of availability and lubricity.

Specific preferable examples of the component (B) include di(2-ethylhexanoic acid) neopentyl glycol ester, di(oleic acid) neopentyl glycol ester, di(stearic acid) neopentyl glycol ester, tri(2-ethylhexanoic acid) trimethylolethane ester, tri(oleic acid) trimethylolethane ester, tri(stearic acid) trimethylolethane ester, tri(2-ethylhexanoic acid) trimethylolpropane ester, tri(oleic acid) trimethylolpropane ester, tri(stearic acid) trimethylolpropane ester, tri(2-ethylhexanoic acid) glycerol ester, tri(oleic acid) glycerol ester, tri(stearic acid) glycerol ester, tetra(2-ethylhexanoic acid) pentaerythritol ester, tetra(oleic acid) pentaerythritol ester, tetra(stearic acid) pentaerythritol ester, hexa(2-ethylhexanoic acid) dipentaerythritol ester, hexa(oleic acid) dipentaerythritol ester, and hexa(stearic acid) dipentaerythritol ester.

The component (B) may be a single component or a mixture of a plurality of compounds satisfying the above definition, and in the case of the mixture, the total content of the compounds corresponding to the component (B) may be calculated as the content of the component (B). Although the compound corresponding to the component (B) can be synthesized by a known method as necessary, various compounds are commercially available from a reagent manufacturer and the like, and these compounds may be used as they are.

The coating agent composition of the present invention contains the component (A) and the component (B) in a predetermined ratio, that is, the weight ratio of the component (A) to the component (B) within a range of 0.1 < (A)/(B) < 10, preferably 0.5 < (A)/(B) < 10, and more preferably 1 ≤ (A)/(B) ≤ 9. If the amount of the component (A) that secures adhesion to the substrate is too small, the abrasion resistance is deteriorated, and if the amount of the component (B) that secures lubricity is too small, a sufficient effect of improving the abrasion resistance cannot be obtained.

The present invention further provides a surface treatment agent containing the above coating agent composition.

The surface treatment agent may contain an appropriate solvent. Examples of such a solvent include alcohol solvents (such as propylene glycol monomethyl ether, butanol, and isopropanol), ether solvents (such as dibutyl ether, diethyl ether, and tetrahydrofuran), hydrocarbon solvents (such as petroleum benzine, toluene, and xylene), and ketone solvents (such as acetone, methyl ethyl ketone, and methyl isobutyl ketone). Among them, alcohol solvents and ether solvents are desirable in view of solubility, wettability, and the like, and propylene glycol monomethyl ether and dibutyl ether are particularly preferable.

The solvents may be used in admixture of two or more, and it is preferable that the components (A) and (B) are uniformly dissolved. An optimum concentration of the total weight of the components (A) and (B) to be dissolved in the solvent varies depending on the treatment method, and may be an amount that is easy to weigh. That is, in the case of direct coating, it is preferable that the concentration is 0.01 to 10 parts by weight (0.01 to 10 wt%), particularly 0.05 to 5 parts by weight (0.05 to 5 wt%), in total 100 parts by weight of the solvent and the mixture of the components (A) and (B) (surface treatment agent). In the case of evaporation, it is preferable that the concentration is 1 to 100 parts by weight (1 to 100 wt%), particularly 3 to 30 parts by weight (3 to 30 wt%), in total 100 parts by weight of the solvent and the mixture of the components (A) and (B) (surface treatment agent). In the case of wet treatment, it is preferable that the concentration is 0.01 to 10 parts by weight (0.01 to 10 wt%), particularly 0.05 to 1 parts by weight (0.05 to 1 wt%), in total 100 parts by weight of the solvent and the mixture of the components (A) and (B) (surface treatment agent).

To the surface treatment agent, a hydrolysis condensation catalyst such as an organotin compound (such as dibutyltin dimethoxide or dibutyltin dilaurate), an organotitanium compound (such as tetra-n-butyl titanate), an organic acid (such as acetic acid or methanesulfonic acid), or an inorganic acid (such as hydrochloric acid, sulfuric acid, or phosphoric acid) may be added. Among them, acetic acid, tetra-n-butyl titanate, dibutyltin dilaurate, and the like are particularly desirable.

The addition amount in the case of adding the hydrolysis condensation catalyst is preferably 0.1 to 150 parts by weight, particularly preferably 25 to 125 parts by weight, and further preferably 50 to 110 parts by weight, per 100 parts by weight of the mixture of the components (A) and (B) (surface treatment agent).

The surface treatment agent of the present invention may be applied to a substrate by well-known methods such as brush coating, dipping, spraying and evaporation. The heating method during evaporation may be either a resistance heating method or an electron beam heating method, and is not particularly limited. Although a curing temperature varies depending on a curing method, for example, in the case of direct coating (such as brush coating, dipping, or spraying), it is preferable that curing conditions include 15 minutes to 36 hours, especially 30 minutes to 24 hours at 25 to 200°C, especially 25 to 150°C. Curing may be performed under humidification. When the surface treatment agent is applied by evaporation, a range of 20 to 200°C is desirable. Curing may be performed under humidification. A thickness of a cured film is appropriately selected depending on the type of the substrate, and is usually 0.1 to 100 nm, particularly 1 to 20 nm. In the case of spray coating, for example, a procedure involving diluting the agent with an organic solvent having water previously added thereto, for thereby effecting hydrolysis to generate Si-OH, and thereafter, spraying the dilution is recommended because the coating rapidly cures.

The surface treatment agent of the present invention can form a cured film having a contact angle with oleic acid of preferably 30° or less, more preferably 25° or less at 25°C and a relative humidity of 40% measured using a contact angle meter Drop Master (manufactured by Kyowa Interface Science Co., Ltd.). When sebum deposits to the cured film, the sebum looks inconspicuous because of low visibility due to a small contact angle.

The surface treatment agent of the present invention can form a cured film excellent in abrasion resistance without visually recognizable scratches on a substrate even when abraded by steel wool.

The substrate treated with the surface treatment agent of the present invention is not particularly limited, and may be of various materials such as paper, cloth, metal and oxides thereof, glass, plastic, ceramic, and quartz. The surface treatment agent of the present invention can impart water/oil-repellent property to the substrate. In particular, the surface treatment agent can be suitably used as a surface treatment agent for SiO₂-treated glass or film.

Examples of articles treated with the surface treatment agent of the present invention include optical articles such as car navigation systems, mobile phones, smart phones, digital cameras, digital video cameras, PDA, portable audio players, car audio players, game consoles, eyeglass lenses, camera lenses, lens filters, sunglasses, medical instruments such as gastroscopes, copiers, personal computers, liquid crystal displays, organic EL displays, plasma displays, touch panel displays, protective film, and antireflective film. The cured film formed from the surface treatment agent of the present invention is difficultly visible even when fingerprints and sebum deposit on the article, and the cured film is particularly useful as a lipophilic layer of touch panel displays, antireflective films, and the like.

### EXAMPLES

Hereinafter, the present invention will be described in more detail with reference to Synthesis Examples, Examples, and Comparative Examples, but the present invention is not limited to the following Examples.

### [Synthesis Example 1]

10.0 g (4.71 × 10⁻² mol) of ethyl undecenoate placed in a reaction vessel was heated to 80°C. Subsequently, 1.0×10⁻² g (containing 0.3×10⁻⁷ mol as Pt alone) of a toluene solution of chloroplatinic acid/vinylsiloxane complex was added, and then 8.6 g (7.06×10⁻² mol) of trimethoxysilane was added dropwise over 3 hours, followed by heating and stirring at 80°C for 1 hour. Thereafter, a solvent and unreacted substances were distilled off under reduced pressure to obtain 12.1 g of a compound represented by the following formula (A):
[Chem. 91]

**C₂H₅-OOC-(CH₂)₁₀-Si(OCH₃)₃** **(A)**

¹H-NMR
δ0.8 (-(CH₂)₇CH₂-Si(OCH₃)₃) 2H
δ1.2-1.4 (-(CH₂)₇-, -OCH₂CH₃) 17H
δ1.6 (-OOC-CH₂ (CH₂)₇CH₂-Si-) 2H
δ2.3 (-OOC-CH₂-) 2H
δ3.5 (-Si(OCH₃)₃) 9H
δ4.1 (-OCH₂CH₃) 2H

A mixture of 4.5 g (3.4× 10⁻² mol) of tetramethyldisiloxane, 3.6 g of a 12N aqueous hydrochloric acid solution, and 2.5 g of 1,4-bis (trifluoromethyl) benzene placed in a reaction vessel was cooled to 0°C. Subsequently, 5.0 g (1.5×10⁻² mol) of a compound represented by the following formula (A) obtained above was added dropwise, and the mixture was aged at 0°C for 6 hours.
[Chem. 92]

**C₂H₅-OOC-(CH₂)₁₀-Si(OCH₃)₃** **(A)**

Thereafter, a lower layer is recovered by liquid separation operation, and the solvent and unreacted substances are distilled off under reduced pressure to obtain 5.8 g of a product represented by the following formula (B): 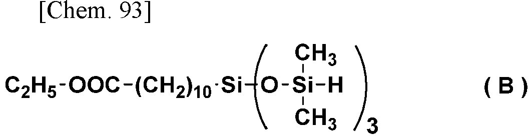
¹H-NMR
δ0.1-0.2 (-Si-CH₃) 18H
δ0.5 (-(CH₂)₇CH₂-Si(O-Si(CH₃)₂-)₃) 2H
δ1.2-1.5 (-(CH₂)₇-, -OCH₂CH₃) 17H
δ1.6 (-OOC-CH₂ (CH₂)₇CH₂-Si-) 2H
δ2.3 (-OOC-CH₂-) 2H
δ4.1 (-OCH₂CH₃) 2H
δ4.7 (-Si-H) 3H

5.0 g (1.1×10⁻² mol) of a compound represented by the following formula (B) obtained above in a reaction vessel was heated to 80°C.

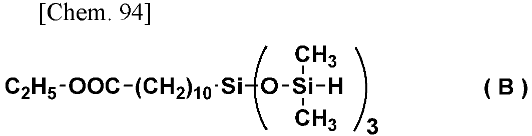

Subsequently, 5.0×10⁻³ g (containing 1.5×10⁻⁸ mol as Pt alone) of a toluene solution of chloroplatinic acid/vinylsiloxane complex was added, and then 7.3 g (4.5×10⁻² mol) of allyltrimethoxysilane was added dropwise, followed by heating and stirring at 80°C for 3 hours. Thereafter, a solvent and unreacted substances were distilled off under reduced pressure to obtain 8.8 g of a product (lipophilic group-containing hydrolyzable organosiloxane compound 1) represented by the following formula (C): 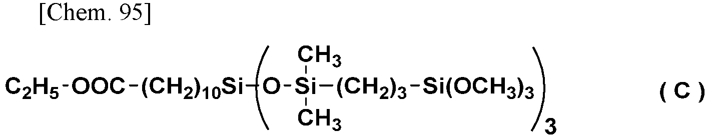
¹H-NMR
δ0.1-0.2 (-Si-CH₃) 18H
δ0.5 (-(CH₂)₇CH₂-Si(O-Si(CH₃)₂-)₃) 2H
δ0.6-0.8 (-SiCH₂CH₂CH₂-Si(OCH₃)₃, -SiCH₂CH₂CH₂-Si(OCH₃)₃) 12H
δ1.2-1.4 (-(CH₂)₇-, -OCH₂CH₃) 17H
δ1.5 (-SiCH₂CH₂CH₂-Si(OCH₃)₃) 6H
δ1.6 (-OOC-CH₂ (CH₂)₇CH₂-Si-) 2H
δ2.3 (-OOC-CH₂-) 2H
δ3.5 (-SiCH₂CH₂CH₂-Si(OCH₃)₃) 27H
δ4.1 (-OCH₂CH₃) 2H

### [Synthesis Example 2]

10.0 g (4.34× 10⁻² mol) of 1,8-bis (dimethylsilyl) octane placed in a reaction vessel was heated to 80°C. Subsequently, 1.0×10⁻² g (containing 0.3×10⁻⁷ mol as Pt alone) of a toluene solution of chloroplatinic acid/vinylsiloxane complex was added, and then 1.9 g (8.95 × 10⁻³ mol) of ethyl undecenoate was added dropwise over 3 hours, followed by heating and stirring at 80°C for 1 hour. Thereafter, a solvent and unreacted substances were distilled off under reduced pressure to obtain 4.1 g of a product represented by the following formula (D): 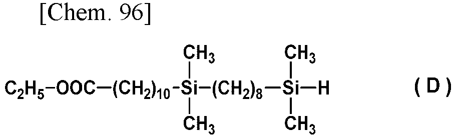
¹H-NMR
δ0.2-0.4 (-Si-CH₃) 12H
δ0.7 (-CH₂-Si-) 6H
δ1.2-1.5 (-(CH₂)₇-, -(CH₂)₆-, -OCH₂CH₃) 29H
δ1.6 (-OOC-CH₂ (CH₂)₇CH₂-Si-) 2H
δ2.3 (-OOC-CH₂-) 2H
δ4.1 (-OCH₂CH₃) 2H
δ4.4 (-Si-H) 1H

4.0 g (9.03×10⁻³ mol) of a compound represented by the following formula (D) obtained above in a reaction vessel was heated to 80°C.

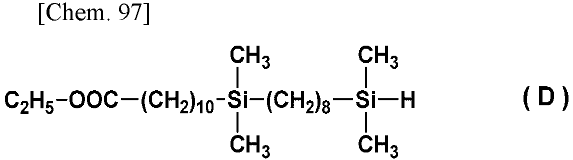

Subsequently, 1.0×10⁻² g (containing 0.3×10⁻⁷ mol as Pt alone) of a toluene solution of chloroplatinic acid/vinylsiloxane complex was added, and then 2.9 g (1.26× 10⁻² mol) of 7-octenyltrimethoxysilane was added dropwise, followed by heating and stirring at 80°C for 3 hours. Thereafter, a solvent and unreacted substances were distilled off under reduced pressure to obtain 5.0 g of a compound represented by the following formula (E): 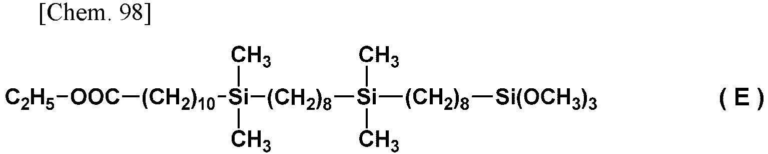
¹H-NMR
δ0.2 (-Si-CH₃) 12H
δ0.6 (-CH₂-Si-) 10H
δ0.7 (-CH₂-Si(OCH₃)₃) 2H
δ1.2-1.4 (-(CH₂)₇-, -(CH₂)₆-, -OCH₂CH₃) 41H
δ1.6 (-OOC-CH₂ (CH₂)₇CH₂-Si-) 2H
δ2.3 (-OOC-CH₂-) 2H
δ3.5 (-SiCH₂(CH₂)₆CH₂-Si(OCH₃)₃) 9H
δ4.1 (-OCH₂CH₃) 2H

A mixture of 1.8 g (1.36×10⁻² mol) of tetramethyldisiloxane, 1.5 g of a 12N aqueous hydrochloric acid solution, and 5.0 g of 1,4-bis (trifluoromethyl) benzene placed in a reaction vessel was cooled to 0°C. Subsequently, 4.0 g (5.92×10⁻³ mol) of a compound represented by the following formula (E) obtained above was added dropwise, and the mixture was aged at 0°C for 6 hours.

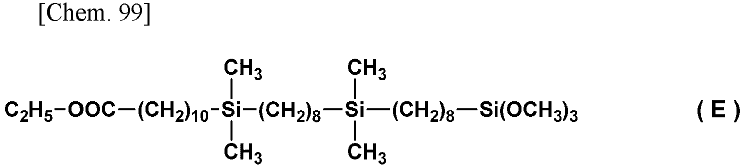

Thereafter, a lower layer is recovered by liquid separation operation, and the solvent and unreacted substances are distilled off under reduced pressure to obtain 3.3 g of a product represented by the following formula (F): 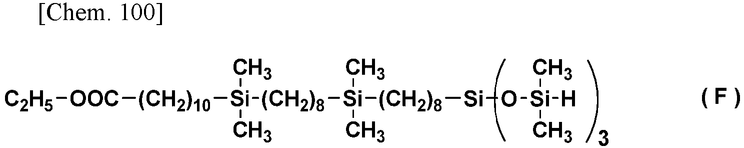
¹H-NMR
δ0.1-0.2 (-Si-CH₃) 30H
δ0.5 (-(CH₂)₇CH₂-Si(O-Si(CH₃)₂-)₃) 2H
δ0.7-0.8 (-Si-CH₂-) 8H
δ1.2-1.5 (-(CH₂)₇-, -OCH₂CH₃, -Si-CH₂(CH₂)₆CH₂-Si-) 41H
δ1.6 (-OOC-CH2CH₂ (CH₂)₇CH₂-Si-) 2H
δ2.3 (-OOC-CH₂-) 2H
δ4.1 (-OCH₂CH₃) 2H
δ4.7 (-Si-H) 3H

2.0 g (2.48×10⁻³ mol) of a compound represented by the following formula (F) obtained above in a reaction vessel was heated to 80°C.

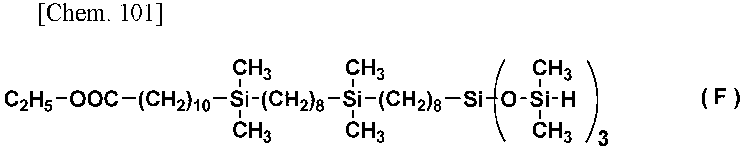

Subsequently, 5.0×10⁻³ g (containing 1.5×10⁻⁸ mol as Pt alone) of a toluene solution of chloroplatinic acid/vinylsiloxane complex was added, and then 2.4 g (1.04×10⁻² mol) of 7-octenyltrimethoxysilane was added dropwise, followed by heating and stirring at 80°C for 3 hours. Thereafter, a solvent and unreacted substances were distilled off under reduced pressure to obtain 3.8 g of a product (lipophilic group-containing hydrolyzable organosiloxane compound 2) represented by the following formula (G): 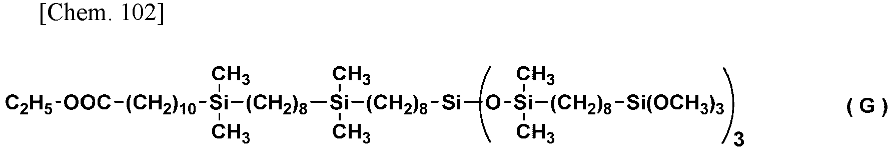
¹H-NMR
δ0.1-0.2 (-Si-CH₃) 30H
δ0.5 (-(CH₂)₇CH₂-Si(O-Si(CH₃)₂-)₃) 2H
δ0.6-0.8 (-Si-CH₂-, -CH₂-Si(OCH₃)₃) 20H
δ1.2-1.4 (-(CH₂)₆-, -(CH₂)₇-, -OCH₂CH₃) 77H
δ1.5 (-SiCH₂(CH₂)₆CH₂-Si(OCH₃)₃) 36H
δ1.6 (-OOC-CH₂CH₂ (CH₂)₇CH₂-Si-) 2H
δ2.3 (-OOC-CH₂-) 2H
δ3.5 (-SiCH₂CH₂CH₂-Si(OCH₃)₃) 27H
δ4.1 (-OCH₂CH₃) 2H

### [Synthesis Example 3]

31.6 g (2.35× 10⁻¹ mol) of tetramethyldisiloxane placed in a reaction vessel was heated to 80°C. Subsequently, 1.0×10⁻² g (containing 0.3×10⁻⁷ mol as Pt alone) of a toluene solution of chloroplatinic acid/vinylsiloxane complex was added, and then 10.0 g (4.71×10⁻² mol) of ethyl undecenoate was added dropwise over 3 hours, followed by heating and stirring at 80°C for 1 hour. Thereafter, a solvent and unreacted substances were distilled off under reduced pressure to obtain 16.4 g of a product represented by the following formula (H): 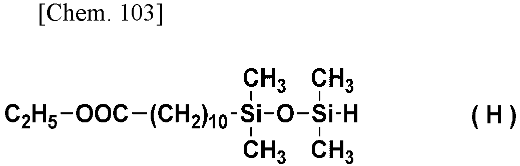
¹H-NMR
δ0.2-0.4 (-Si-CH₃) 12H
δ0.7 (-(CH₂)₇CH₂-Si-) 2H
δ1.2-1.5 (-(CH₂)₇-, -OCH₂CH₃) 17H
δ1.6 (-OOC-CH₂ (CH₂)₇CH₂-Si-) 2H
δ2.3 (-OOC-CH₂-) 2H
δ4.1 (-OCH₂CH₃) 2H
δ4.4 (-Si-H) 1H

10.0 g (2.88×10⁻² mol) of a compound represented by the following formula (H) obtained above in a reaction vessel was heated to 80°C.

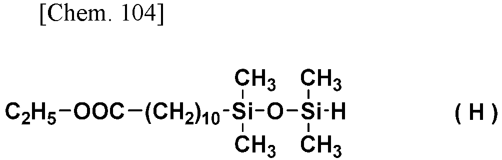

Subsequently, 1.0×10⁻² g (containing 0.3×10⁻⁷ mol as Pt alone) of a toluene solution of chloroplatinic acid/vinylsiloxane complex was added, and then 9.4 g (4.04×10⁻² mol) of 7-octenyltrimethoxysilane was added dropwise, followed by heating and stirring at 80°C for 3 hours. Thereafter, a solvent and unreacted substances were distilled off under reduced pressure to obtain 15.1 g of a product represented by the following formula (I): 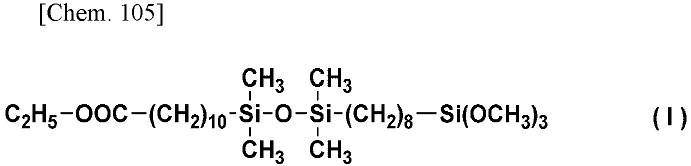
¹H-NMR
δ0.2-0.3 (-Si-CH₃) 12H
δ0.7 (-(CH₂)₇CH₂-Si-, -SiCH₂ (CH₂)₆CH₂-Si(OCH₃)₃) 4H
δ0.8 (-SiCH₂(CH₂)₆CH₂-Si(OCH₃)₃) 2H
δ1.2-1.4 (-(CH₂)₇-, -SiCH₂(CH₂)₆CH₂-Si(OCH₃)₃, -OCH₂CH₃) 29H
δ1.6 (-OOC-CH₂CH₂ (CH₂)₇CH₂-Si-) 2H
δ2.3 (-OOC-CH₂-) 2H
δ3.5 (-SiCH₂(CH₂)₆CH₂-Si(OCH₃)₃) 9H
δ4.1 (-OCH₂CH₃) 2H

A mixture of 5.1 g (3.8× 10⁻² mol) of tetramethyldisiloxane, 4.1 g of a 12N aqueous hydrochloric acid solution, and 5.0 g of 1,4-bis (trifluoromethyl) benzene placed in a reaction vessel was cooled to 0°C. Subsequently, 10.0 g (1.7×10-2 mol) of a compound represented by the following formula (I) obtained above was added dropwise, and the mixture was aged at 0°C for 6 hours.

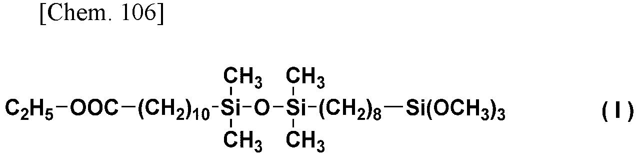

Thereafter, a lower layer is recovered by liquid separation operation, and the solvent and unreacted substances are distilled off under reduced pressure to obtain 8.6 g of a product represented by the following formula (J): 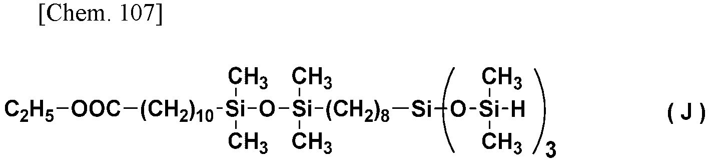
¹H-NMR
δ0.1-0.2 (-Si-CH₃) 30H
δ0.5-0.6 (-O-Si(CH₃)₂-CH₂-) 6H
δ1.2-1.5 (-(CH₂)₇-, -OCH₂CH₃, -Si-CH₂(CH₂)₆CH₂-Si-) 29H
δ1.6 (-OOC-CH₂CH₂ (CH₂)₇CH₂-Si-) 2H
δ2.3 (-OOC-CH₂-) 2H
δ4.1 (-OCH₂CH₃) 2H
δ4.7 (-Si-H) 3H

5.0 g (7.0×10⁻³ mol) of a compound represented by the following formula (J) obtained above in a reaction vessel was heated to 80°C.

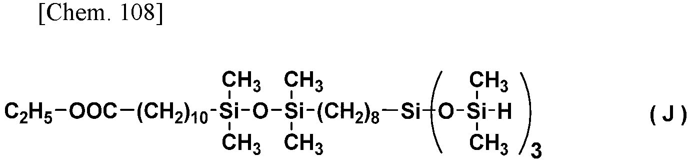

Subsequently, 5.0×10⁻³ g (containing 1.5×10⁻⁸ mol as Pt alone) of a toluene solution of chloroplatinic acid/vinylsiloxane complex was added, and then 6.5 g (2.8×10⁻² mol) of 7-octenyltrimethoxysilane was added dropwise, followed by heating and stirring at 80°C for 3 hours. Thereafter, a solvent and unreacted substances were distilled off under reduced pressure to obtain 7.6 g of a product (lipophilic group-containing hydrolyzable organosiloxane compound 3) represented by the following formula (K): 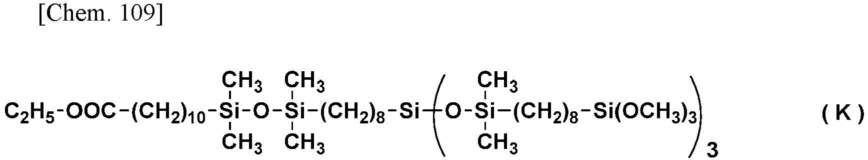
¹H-NMR
δ0.1-0.2 (-Si-CH₃) 30H
δ0.5-0.7 (-O-Si(CH₃)₂-CH₂-, -SiCH₂(CH₂)₆CH₂-Si(OCH₃)₃, -SiCH₂ (CH₂)₆CH₂-Si(OCH₃)₃) 18H
δ1.2-1.4 (-(CH₂)₇-, -OCH₂CH₃) 17H
δ1.5 (-SiCH₂(CH₂)₆CH₂-Si(OCH₃)₃) 36H
δ1.6 (-OOC-CH₂ (CH₂)₇CH₂-Si-) 2H
δ2.3 (-OOC-CH₂-) 2H
δ3.5 (-SiCH₂CH₂CH₂-Si(OCH₃)₃) 27H
δ4.1 (-OCH₂CH₃) 2H

### [Synthesis Example 4]

45.7 g (2.35×10⁻¹ mol) of 1,4-bis (dimethylsilyl) benzene placed in a reaction vessel was heated to 80°C. Subsequently, 1.0×10⁻² g (containing 0.3×10⁻⁷ mol as Pt alone) of a toluene solution of chloroplatinic acid/vinylsiloxane complex was added, and then 10.0 g (4.71×10⁻² mol) of ethyl undecenoate was added dropwise over 3 hours, followed by heating and stirring at 80°C for 1 hour. Thereafter, a solvent and unreacted substances were distilled off under reduced pressure to obtain 18.0 g of a product represented by the following formula (L): 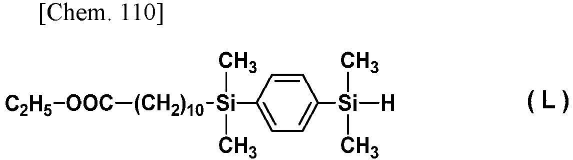
¹H-NMR
δ0.2-0.4 (-Si-CH₃) 12H
δ0.7 (-(CH₂)₇CH₂-Si-) 2H
δ1.2-1.5 (-(CH₂)₇-, -OCH₂CH₃) 17H
δ1.6 (-OOC-CH₂CH₂ (CH₂)₇CH₂-Si-) 2H
δ2.3 (-OOC-CH₂-) 2H
δ4.1 (-OCH₂CH₃) 2H
δ4.4 (-Si-H) 1H
δ7.5 (-Si-C₆H₄-Si-) 4H

10.0 g (2.46× 10⁻² mol) of a compound represented by the following formula (L) obtained above in a reaction vessel was heated to 80°C.

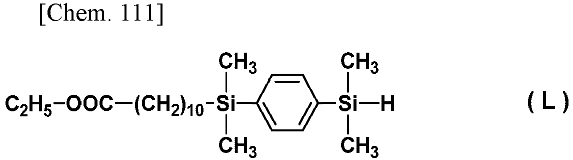

Subsequently, 1.0×10⁻² g (containing 0.3×10⁻⁷ mol as Pt alone) of a toluene solution of chloroplatinic acid/vinylsiloxane complex was added, and then 9.10 g (3.94×10⁻² mol) of 7-octenyltrimethoxysilane was added dropwise, followed by heating and stirring at 80°C for 4 hours. Thereafter, a solvent and unreacted substances were distilled off under reduced pressure to obtain 14.0 g of a compound represented by the following formula (M): 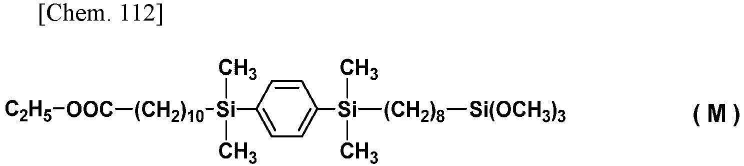
¹H-NMR
δ0.2 (-Si-CH₃) 12H
δ0.6 (-SiCH₂ (CH₂)₆CH₂-Si(OCH₃)₃) 2H
δ0.7 (-(CH₂)₇CH₂-Si-, -SiCH₂(CH₂)₆CH₂-Si(OCH₃)₃) 4H
δ1.2-1.4 (-(CH₂)₇-, -(CH₂)₆-, -OCH₂CH₃) 29H
δ1.6 (-OOC-CH₂CH₂ (CH₂)₇CH₂-Si-) 2H
δ2.3 (-OOC-CH₂-) 2H
δ3.5 (-SiCH₂(CH₂)₆CH₂-Si(OCH₃)₃) 9H
δ4.1 (-OCH₂CH₃) 2H
δ7.5 (-Si-C₆H₄-Si-) 4H

A mixture of 3.3 g (2.5×10⁻² mol) of tetramethyldisiloxane, 2.6 g of a 12N aqueous hydrochloric acid solution, and 3.5 g of 1,4-bis (trifluoromethyl) benzene placed in a reaction vessel was cooled to 0°C. Subsequently, 7.0 g (1.1×10⁻² mol) of a compound represented by the following formula (M) obtained above was added dropwise, and the mixture was aged at 0°C for 6 hours.

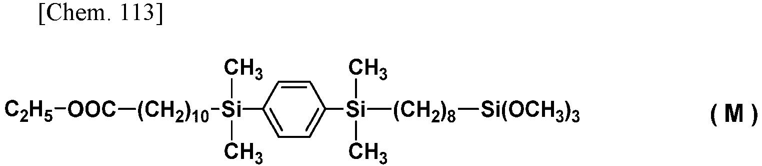

Thereafter, a lower layer is recovered by liquid separation operation, and the solvent and unreacted substances are distilled off under reduced pressure to obtain 5.6 g of a product represented by the following formula (N): 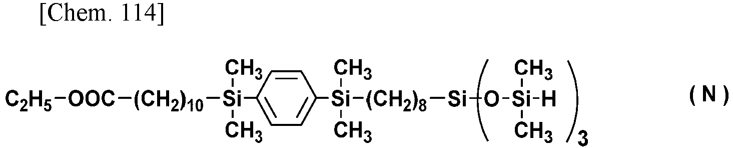
¹H-NMR
δ0.1-0.2 (-Si-CH₃) 30H
δ0.5 (-(CH₂)₇CH₂-Si(O-Si(CH₃)₂-)₃) 2H
δ0.7-0.8 (-C₆H₄-Si-CH₂-) 4H
δ1.2-1.5 (-(CH₂)₇-, -OCH₂CH₃, -Si-CH₂(CH₂)₆CH₂-Si-) 29H
δ1.6 (-OOC-CH₂CH₂ (CH₂)₇CH₂-Si-) 2H
δ2.3 (-OOC-CH₂-) 2H
δ4.1 (-OCH₂CH₃) 2H
δ4.7 (-Si-H) 3H
δ7.5 (-Si-C₆H₄-Si-) 4H

1.8 g (2.3×10⁻³ mol) of a compound represented by the following formula (N) obtained above in a reaction vessel was heated to 80°C.

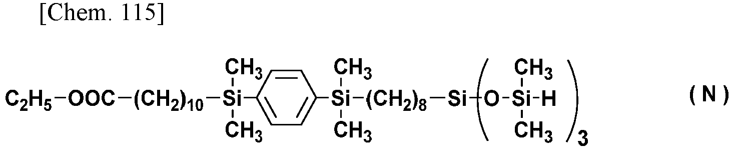

Subsequently, 2.0×10⁻³ g (containing 6.0×10⁻⁹ mol as Pt alone) of a toluene solution of chloroplatinic acid/vinylsiloxane complex was added, and then 2.3 g (9.8×10⁻³ mol) of 7-octenyltrimethoxysilane was added dropwise, followed by heating and stirring at 80°C for 3 hours. Thereafter, a solvent and unreacted substances were distilled off under reduced pressure to obtain 2.7 g of a product (lipophilic group-containing hydrolyzable organosiloxane compound 4) represented by the following formula (O): 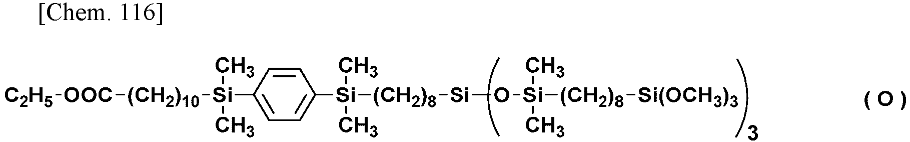
¹H-NMR
δ0.1-0.2 (-Si-CH₃) 30H
δ0.5 (-(CH₂)₇CH₂-Si(O-Si(CH₃)₂-)₃) 2H
δ0.6-0.8 (-C₆H₄-Si-CH₂-, -SiCH₂(CH₂)₆CH₂-Si(OCH₃)₃, -SiCH₂ (CH₂)₆CH₂-Si(OCH₃)₃) 16H
δ1.2-1.4 (-(CH₂)₇-, -OCH₂CH₃) 17H
δ1.5 (-SiCH₂(CH₂)₆CH₂-Si(OCH₃)₃) 36H
δ1.6 (-OOC-CH₂CH₂ (CH₂)₇CH₂-Si-) 2H
δ2.3 (-OOC-CH₂-) 2H
δ3.5 (-SiCH₂(CH₂)₆CH₂-Si(OCH₃)₃) 27H
δ4.1 (-OCH₂CH₃) 2H
δ7.5 (-Si-C₆H₄-Si-) 4H

### [Synthesis Example 5]

40.6 g (2.09×10⁻¹ mol) of 1,4-bis (dimethylsilyl) benzene placed in a reaction vessel was heated to 80°C. Subsequently, 1.0×10⁻² g (containing 0.3×10⁻⁷ mol as Pt alone) of a toluene solution of chloroplatinic acid/vinylsiloxane complex was added, and then 10.0 g (4.18×10⁻² mol) of a compound represented by the following formula (P) was added dropwise over 3 hours, followed by heating and stirring at 80°C for 6 hours.

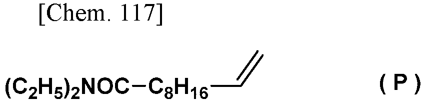

Thereafter, a solvent and unreacted substances were distilled off under reduced pressure to obtain 17.1 g of a product represented by the following formula (Q): 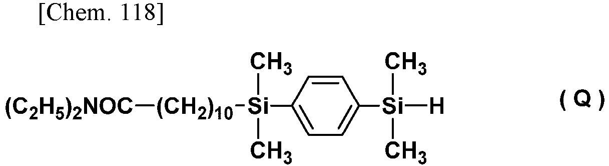
¹H-NMR
δ0.2-0.4 (-Si-CH₃) 12H
δ0.7 (-(CH₂)₇CH₂-Si-) 2H
δ1.0-1.2 (-N(CH₂CH₃)₂) 6H
δ1.2-1.5 (-(CH₂)₇-) 14H
δ1.6 (-NOC-CH₂CH₂ (CH₂)₇CH₂-Si-) 2H
δ2.3 (-NOC-CH₂-) 2H
δ3.2-3.4 (-N(CH₂CH₃)₂) 4H
δ4.4 (-Si-H) 1H
δ7.5 (-Si-C₆H₄-Si-) 4H

10.0 g (2.31×10⁻² mol) of a compound represented by the following formula (Q) obtained above in a reaction vessel was heated to 80°C.

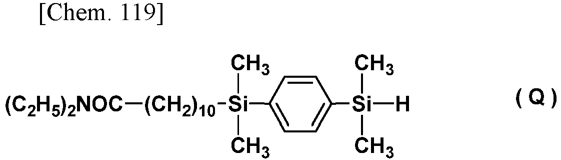

Subsequently, 1.0×10⁻² g (containing 0.3×10⁻⁷ mol as Pt alone) of a toluene solution of chloroplatinic acid/vinylsiloxane complex was added, and then 7.5 g (3.23×10⁻² mol) of 7-octenyltrimethoxysilane was added dropwise, followed by heating and stirring at 80°C for 6 hours. Thereafter, a solvent and unreacted substances were distilled off under reduced pressure to obtain 12.6 g of a compound represented by the following formula (R): 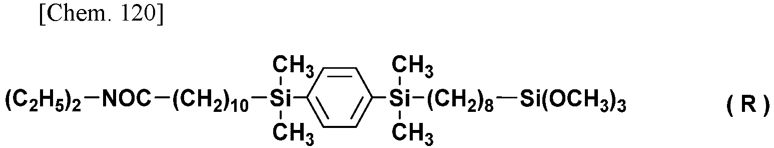
¹H-NMR
δ0.2-0.3 (-Si-CH₃) 12H
δ0.7 (-(CH₂)₇CH₂-Si-, -SiCH₂ (CH₂)₆CH₂-Si(OCH₃)₃) 4H
δ0.8 (-SiCH₂(CH₂)₆CH₂-Si(OCH₃)₃) 2H
δ1.0-1.2 (-N(CH₂CH₃)₂) 6H
δ 1.2-1.4 (-(CH₂)₇-) 14H
δ1.5 (-SiCH₂ (CH₂)₆CH₂-Si(OCH₃)₃) 2H
δ1.6 (-NOC-CH₂CH₂ (CH₂)₇CH₂-Si-) 2H
δ2.3 (-NOC-CH₂-) 2H
δ3.2-3.4 (-N(CH₂CH₃)₂) 4H
δ3.5 (-SiCH₂(CH₂)₆CH₂-Si(OCH₃)₃) 9H
δ7.5 (-Si-C₆H₄-Si-) 4H

A mixture of 4.5 g (3.4× 10⁻² mol) of tetramethyldisiloxane, 3.6 g of a 12N aqueous hydrochloric acid solution, and 5.0 g of 1,4-bis (trifluoromethyl) benzene placed in a reaction vessel was cooled to 0°C. Subsequently, 10.0 g (1.5×10⁻² mol) of a compound represented by the following formula (R) obtained above was added dropwise, and the mixture was aged at 0°C for 6 hours.

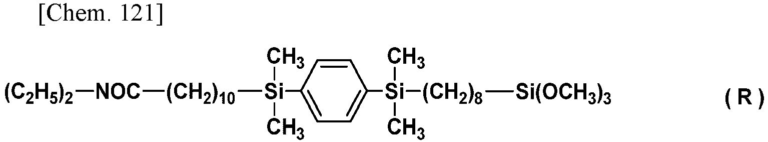

Thereafter, a lower layer is recovered by liquid separation operation, and the solvent and unreacted substances are distilled off under reduced pressure to obtain 8.6 g of a product represented by the following formula (S): 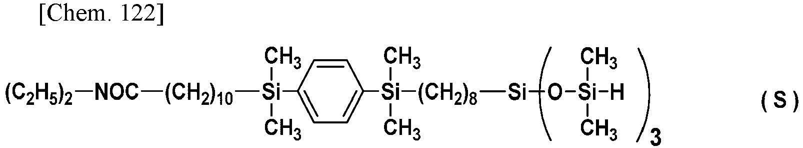
¹H-NMR
δ0.1-0.2 (-Si-CH₃) 30H
δ0.5 (-(CH₂)₇CH₂-Si(O-Si(CH₃)₂-)₃) 2H
δ0.7-0.8 (-C₆H₄-Si-CH₂-) 4H
δ1.0-1.2 (-N(CH₂CH₃)₂) 6H
δ1.2-1.5 (-(CH₂)₇-, -Si-CH₂(CH₂)₆CH₂-Si-) 26H
δ1.6 (-NOC-CH₂CH₂ (CH₂)₇CH₂-Si-) 2H
δ2.3 (-NOC-CH₂-) 2H
δ3.2-3.4 (-N(CH₂CH₃)₂) 4H
δ4.7 (-Si-H) 3H
δ7.5 (-Si-C₆H₄-Si-) 4H

5.0 g (6.3×10⁻³ mol) of a compound represented by the following formula (S) obtained above in a reaction vessel was heated to 80°C.

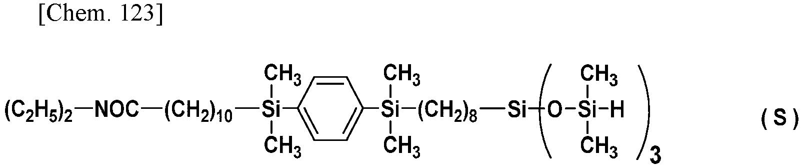

Subsequently, 5.0×10⁻³ g (containing 1.5×10⁻⁸ mol as Pt alone) of a toluene solution of chloroplatinic acid/vinylsiloxane complex was added, and then 5.9 g (2.5×10⁻² mol) of 7-octenyltrimethoxysilane was added dropwise, followed by heating and stirring at 80°C for 3 hours. Thereafter, a solvent and unreacted substances were distilled off under reduced pressure to obtain 8.1 g of a product (lipophilic group-containing hydrolyzable organosiloxane compound 5) represented by the following formula (T): 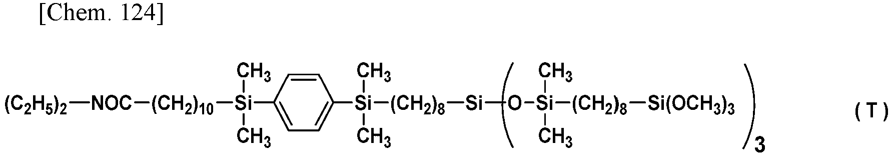
¹H-NMR
δ0.1-0.2 (-Si-CH₃) 30H
δ0.5 (-(CH₂)₇CH₂-Si(O-Si(CH₃)₂-)₃) 2H
δ0.6-0.8 (-C₆H₄-Si-CH₂-, -SiCH₂(CH₂)₆CH₂-Si(OCH₃)₃, -SiCH₂ (CH₂)₆CH₂-Si(OCH₃)₃) 16H
δ1.0-1.2 (-N(CH₂CH₃)₂) 6H
δ1.2-1.4 (-(CH₂)₇-, -Si-CH₂(CH₂)₆CH₂-Si-) 26H
δ1.5 (-SiCH₂(CH₂)₆CH₂-Si(OCH₃)₃) 6H
δ1.6 (-NOC-CH₂CH₂ (CH₂)₇CH₂-Si-) 2H
δ2.3 (-NOC-CH₂-) 2H
δ3.2-3.4 (-N(CH₂CH₃)₂) 4H
δ3.5 (-SiCH₂(CH₂)₆CH₂-Si(OCH₃)₃) 27H
δ7.5 (-Si-C₆H₄-Si-) 4H

### [Examples 1 to 14, Comparative Examples 1 to 3]

The lipophilic group-containing (hydrolyzable) organosiloxane compounds (compounds 1) to (compound 5) obtained above and the following polyol esters (B-1) to (B-6) were mixed at the ratio shown in Tables 1 to 3, and dissolved in propylene glycol monomethyl ether to prepare a 0.2 wt% solution, thereby preparing a surface treatment agent. Thereafter, the surface treatment agent was spray-coated on Gorilla glass manufactured by Corning Incorporated and cured at 40°C and 80% RH for 12 hours to prepare a cured film having a thickness of about 5 nm.
(B-1) Di(oleic acid) neopentyl glycol ester
(B-2) Tri(2-ethylhexanoic acid) trimethylolpropane ester
(B-3) Tri(oleic acid) trimethylolpropane ester
(B-4) Tri(oleic acid) glycerol ester
(B-5) Tri(stearic acid) glycerol ester
(B-6) Tetra(2-ethylhexanoic acid) pentaerythritol ester

### [Evaluation of fingerprint visibility]

Sebum was deposited to the glass on which the cured film prepared above was formed at a load of 1 kg, and the visibility was visually and sensorily evaluated in the following four stages. It should be noted that "fingerprints little visible" means that the fingerprint is not visible at first glance but is eventually visible if looking carefully, and "fingerprints fairly visible" means that the fingerprint is slightly visible at first glance. The results are shown in Tables 1 to 3.
4: fingerprints little visible ~ fingerprints are not visible
3: fingerprints fairly visible
2: fingerprints thinly, but definitely visible
1: fingerprints definitely visible

### [Evaluation of lipophilicity]

For the glass on which the cured film prepared above was formed, a contact angle (oleic acid contact angle) of the cured film with respect to oleic acid was measured using a contact angle meter Drop Master (manufactured by Kyowa Interface Science Co., Ltd.) (droplet: 2 µl, temperature: 25°C, humidity (RH): 40%, measurement time: 40 seconds). The results are shown in Tables 1 to 3.

### [Evaluation of abrasion resistance]

Using a rubbing tester (manufactured by Shinto Scientific Co., Ltd.), the glass on which the cured film prepared above was formed was abraded 50 times under the following conditions, and a process of visually confirming the presence or absence of scratches on the surface was repeated until scratches were confirmed, so that the abrasion resistance was evaluated. The larger the number of times until scratches are confirmed, the higher the abrasion resistance, and the smaller the number of times until scratches are confirmed, the lower the abrasion resistance. The test environment conditions include a temperature of 25°C and a humidity of 40%. The number of times of abrasion (durable number of times against steel wool) when scratches were visually confirmed is shown in Tables 1 to 3.

### Steel wool abrasion resistance

Steel wool: BONSTAR # 0000 (manufactured by NIHON STEEL WOOL Co., Ltd.)
Contact area: 10 mmφ
Movement distance (one way): 40 mm
Movement speed: 3,200 mm/min
Load: 1.5 kg/cm

**[Table 1]**

| | Composition compounding amount (pbw) | Example 1 | Example 2 | Example 3 | Example 4 | Example 5 | Example 6 | Example 7 |
|---|---|---|---|---|---|---|---|---|
| Component (A) | Compound 1 | 50 | 50 | 50 | 50 | 50 | 50 | |
| | Compound 2 | | | | | | | 50 |
| | Compound 3 | | | | | | | |
| | Compound 4 | | | | | | | |
| | Compound 5 | | | | | | | |
| Component (B) | (B-1) | 50 | | | | | | |
| | (B-2) | | 50 | | | | | 50 |
| | (B-3) | | | 50 | | | | |
| | (B-4) | | | | 50 | | | |
| | (B-5) | | | | | 50 | | |
| | (B-6) | | | | | | 50 | |
| Fingerprint visibility | | 4 | 4 | 4 | 4 | 4 | 4 | 4 |
| Oleic acid contact angle (°) | | 7 | 6 | 6 | 6 | 7 | 8 | 8 |
| Steel wool resistance | | 550 | 750 | 700 | 650 | 650 | 700 | 800 |
| Durable number of times (times) | | | | | | | | |

**[Table 2]**

| | Composition compounding amount (pbw) | Example 8 | Example 9 | Example 10 | Example 11 | Example 12 | Example 13 | Example 14 |
|---|---|---|---|---|---|---|---|---|
| Component (A) | Compound 1 | | | | 70 | 90 | | |
| | Compound 2 | | | | | | | |
| | Compound 3 | 50 | | | | | | |
| | Compound 4 | | 50 | | | | 70 | 90 |
| | Compound 5 | | | 50 | | | | |
| Component (B) | (B-1) | | | | | | | |
| | (B-2) | 50 | 50 | 50 | 30 | 10 | | |
| | (B-3) | | | | | | | |
| | (B-4) | | | | | | 30 | 10 |
| | (B-5) | | | | | | | |
| | (B-6) | | | | | | | |
| Fingerprint visibility | | 4 | 4 | 4 | 4 | 4 | 4 | 4 |
| Oleic acid contact angle (°) | | 10 | 6 | 7 | 7 | 7 | 7 | 8 |
| Steel wool resistance | | 700 | 850 | 800 | 650 | 550 | 750 | 600 |
| Durable number of times (times) | | | | | | | | |

**[Table 3]**

| | Composition compounding amount (pbw) | Comparative Example 1 | Comparative Example 2 | Comparative Example 3 |
|---|---|---|---|---|
| Component (A) | Compound 1 | 100 | | 95 |
| | Compound 2 | | | |
| | Compound 3 | | | |
| | Compound 4 | | | |
| | Compound 5 | | | |
| Component (B) | (B-1) | | | |
| | (B-2) | | 100 | 5 |
| | (B-3) | | | |
| | (B-4) | | | |
| | (B-5) | | | |
| | (B-6) | | | |
| Fingerprint visibility | | 4 | 4 | 4 |
| Oleic acid contact angle (°) | | 6 | 8 | 6 |
| Steel wool resistance | | 50 or less | 150 | 100 |
| Durable number of times (times) | | | | |

Examples showed excellent low-fingerprint-visibility, lipophilicity, and abrasion resistance. On the other hand, Comparative Example 1 having only the lipophilic group-containing (hydrolyzable) organosiloxane compound (component (A)) showed extremely low abrasion resistance. Comparative Example 2 having only the polyol ester (component (B)) showed low abrasion resistance. In Comparative Example 3 in which the compounding amount of the polyol ester (component (B)) was smaller than the amount specified in the present invention, the effect of improving the abrasion resistance was not sufficient.

## Claims

1. A coating agent composition comprising as essential components:
(A) a lipophilic group-containing (hydrolyzable) organosiloxane compound containing a lipophilic group selected from a group having formula (-C(=O)OR¹), a group having formula (-O-C(=O)R¹), a group having formula (-C(=O)NR¹₂), a group having formula (-C(=O)SR¹), and a group having formula (-P(=O)(OR¹)₂), wherein in the formula, R¹ is independently a hydrogen atom, an alkyl group having 1 to 30 carbon atoms, an aryl group having 6 to 30 carbon atoms, or an aralkyl group having 7 to 30 carbon atoms, and a silanol group or a hydrolyzable silyl group and/or a partial (hydrolysis) condensate thereof; and
(B) a polyol ester including a condensate of a divalent to hexavalent alcohol and a fatty acid having 3 to 22 carbon atoms,
wherein a weight ratio of the component (A) to the component (B) is within a range of 0.1 < (A)/(B) < 10.

2. The coating agent composition of claim 1, wherein the component (A) is a lipophilic group-containing (hydrolyzable) organosiloxane compound having the following general formula (1) and/or a partial (hydrolysis) condensate thereof: 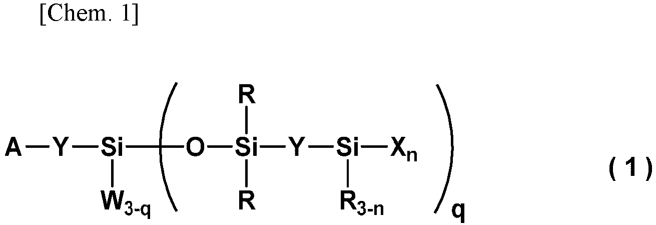
wherein A is -C(=O)OR¹, -O-C(=O)R¹, -C(=O)NR¹₂, -C(=O)SR¹, or -P(=O)(OR¹)₂,
wherein R¹ is independently a hydrogen atom, an alkyl group having 1 to 30 carbon atoms, an aryl group having 6 to 30 carbon atoms, or an aralkyl group having 7 to 30 carbon atoms, Y is independently a divalent organic group, W is independently an alkyl group having 1 to 4 carbon atoms, a phenyl group, a hydroxyl group, or a hydrolyzable group, R is independently an alkyl group having 1 to 4 carbon atoms or a phenyl group, X is independently a hydroxyl group or a hydrolyzable group, n is an integer of 1 to 3, and q is an integer of 1 to 3.

3. The coating agent composition of claim 2, wherein in the lipophilic group-containing (hydrolyzable) organosiloxane compound having the general formula (1) of the component (A), Y is independently an alkylene group having 2 to 30 carbon atoms which may contain a divalent group selected from -O-, -S-, -NR-, -C(=O)-, -C(=O)O-, -C(=O)NR-, -OC(=O)NR-, wherein R is an alkyl group having 1 to 4 carbon atoms or a phenyl group, a silalkylene group, a silarylene group, and a linear, branched, or cyclic divalent organo (poly) siloxane residue having 2 to 10 silicon atoms, and may contain an arylene group having 6 to 20 carbon atoms.

4. The coating agent composition of claim 2 or 3, wherein in the lipophilic group-containing (hydrolyzable) organosiloxane compound having the general formula (1) of the component (A), W is independently selected from the groups consisting of an alkyl group having 1 to 4 carbon atoms, a phenyl group, a hydroxyl group, an alkoxy group having 1 to 10 carbon atoms, an alkoxy-substituted alkoxy group having 2 to 10 carbon atoms, an acyloxy group having 1 to 10 carbon atoms, an alkenyloxy group having 2 to 10 carbon atoms, a halogen atom, an oxime group, an isocyanate group, and a cyanate group.

5. The coating agent composition of any one of claims 1 to 4, wherein the component (A) is a lipophilic group-containing (hydrolyzable) organosiloxane compound having the following general formula (2) and/or a partial (hydrolysis) condensate thereof: 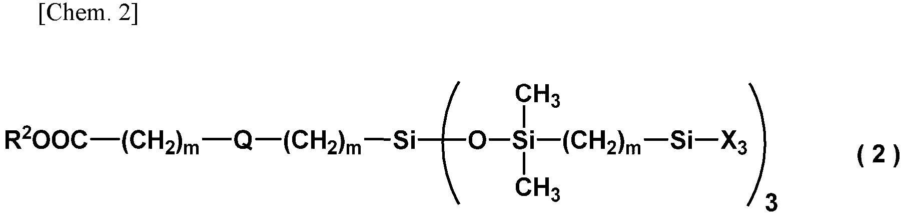 wherein R² is an alkyl group having 1 to 20 carbon atoms, an aryl group having 6 to 20 carbon atoms, or an aralkyl group having 7 to 20 carbon atoms, Q is a single bond or a divalent group selected from a silalkylene group, a silarylene group, and a linear, branched, or cyclic divalent organo (poly) siloxane residue having 2 to 10 silicon atoms, m is independently an integer of 1 to 20, and X is independently a hydroxyl group or a hydrolyzable group.

6. The coating agent composition of any one of claims 1 to 5, wherein the component (B) is a polyol ester including a condensate of a polyhydric alcohol selected from neopentyl glycol, trimethylolethane, trimethylolpropane, glycerol, pentaerythritol, and dipentaerythritol and a fatty acid having 3 to 22 carbon atoms.

7. A surface treatment agent containing the coating agent composition of any one of claims 1 to 6.

8. The surface treatment agent of claim 7, further comprising a solvent.

9. The surface treatment agent of claim 7 or 8, further comprising a hydrolysis condensation catalyst.

10. The surface treatment agent of any one of claims 7 to 9, providing a cured film having an oleic acid contact angle of 30° or less at 25°C and a relative humidity of 40%.

11. An article having a cured film of the surface treatment agent of any one of claims 7 to 10 on its surface.

## Patentansprüche

1. Beschichtungsmittelzusammensetzung, umfassend als wesentliche Komponenten:
(A) eine lipophile Gruppen enthaltende (hydrolysierbare) Organosiloxanverbindung, die eine lipophile Gruppe enthält, ausgewählt aus einer Gruppe mit der Formel (-C(=O)OR¹), einer Gruppe mit der Formel (-O-C(=O)R¹), einer Gruppe mit der Formel (-C(=O)NR¹₂), einer Gruppe mit der Formel (-C(=O)SR¹) und einer Gruppe mit der Formel (-P(=O)(OR¹)₂), wobei in der Formel R¹ unabhängig ein Wasserstoffatom, eine Alkylgruppe mit 1 bis 30 Kohlenstoffatomen, eine Arylgruppe mit 6 bis 30 Kohlenstoffatomen oder eine Aralkylgruppe mit 7 bis 30 Kohlenstoffatomen ist, und eine Silanolgruppe oder eine hydrolysierbare Silylgruppe und/oder ein partielles (Hydrolyse-)Kondensat davon; und
(B) einen Polyolester, der ein Kondensat aus einem zweiwertigen bis sechswertigen Alkohol und einer Fettsäure mit 3 bis 22 Kohlenstoffatomen enthält,
wobei das Gewichtsverhältnis der Komponente (A) zu der Komponente (B) in einem Bereich von 0,1 < (A)/(B) < 10 liegt.

2. Beschichtungsmittelzusammensetzung nach Anspruch 1, wobei die Komponente (A) eine lipophile Gruppen enthaltende (hydrolysierbare) Organosiloxanverbindung mit der folgenden allgemeinen Formel (1) und/oder ein partielles (Hydrolyse-)Kondensat davon ist: 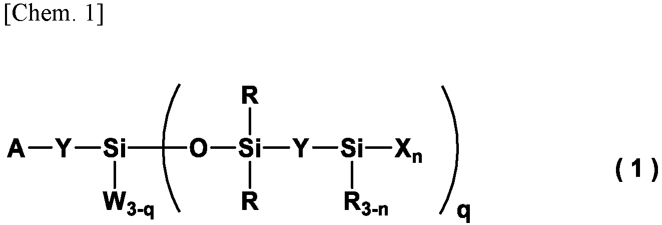 worin A -C(=O)OR¹, -O-C(=O)R¹, -C(=O)NR¹₂, -C(=O)SR¹ oder -P(=O)(OR¹)₂ ist, worin R¹ unabhängig ein Wasserstoffatom, eine Alkylgruppe mit 1 bis 30 Kohlenstoffatomen, eine Arylgruppe mit 6 bis 30 Kohlenstoffatomen oder eine Aralkylgruppe mit 7 bis 30 Kohlenstoffatomen ist, Y unabhängig eine zweiwertige organische Gruppe ist, W unabhängig eine Alkylgruppe mit 1 bis 4 Kohlenstoffatomen, eine Phenylgruppe, eine Hydroxylgruppe oder eine hydrolisierbare Gruppe ist, R unabhängig eine Alkylgruppe mit 1 bis 4 Kohlenstoffatomen oder eine Phenylgruppe ist, X unabhängig eine Hydroxylgruppe oder eine hydrolisierbare Gruppe ist, n eine ganze Zahl von 1 bis 3 ist und q eine ganze Zahl von 1 bis 3 ist.

3. Beschichtungsmittelzusammensetzung nach Anspruch 2, wobei in der lipophile Gruppen enthaltenden (hydrolysierbaren) Organosiloxanverbindung mit der allgemeinen Formel (1) der Komponente (A) Y unabhängig eine Alkylengruppe mit 2 bis 30 Kohlenstoffatomen, die eine zweiwertige Gruppe enthalten kann, ausgewählt aus -O-, -S-, -NR-, -C(=O)-, -C(=O)O-, -C(=O)NR-, -OC(=O)NR-, worin R eine Alkylgruppe mit 1 bis 4 Kohlenstoffatomen oder eine Phenylgruppe ist, eine Silalkylengruppe, eine Silarylengruppe und ein linearer, verzweigter oder zyklischer zweiwertiger Organo(poly)siloxanrest mit 2 bis 10 Siliziumatomen ist, und eine Arylengruppe mit 6 bis 20 Kohlenstoffatomen enthalten kann.

4. Beschichtungsmittelzusammensetzung nach Anspruch 2 oder 3, wobei in der lipophile Gruppen enthaltenden (hydrolysierbaren) Organosiloxanverbindung mit der allgemeinen Formel (1) der Komponente (A) W unabhängig ausgewählt ist aus den Gruppen, bestehend aus einer Alkylgruppe mit 1 bis 4 Kohlenstoffatomen, einer Phenylgruppe, einer Hydroxylgruppe, einer Alkoxygruppe mit 1 bis 10 Kohlenstoffatomen, einer alkoxysubstituierten Alkoxygruppe mit 2 bis 10 Kohlenstoffatomen, einer Acyloxygruppe mit 1 bis 10 Kohlenstoffatomen, einer Alkenyloxygruppe mit 2 bis 10 Kohlenstoffatomen, einem Halogenatom, einer Oximgruppe, einer Isocyanatgruppe und einer Cyanatgruppe.

5. Beschichtungsmittelzusammensetzung nach einem der Ansprüche 1 bis 4, wobei die Komponente (A) eine lipophile Gruppen enthaltende (hydrolysierbare) Organosiloxanverbindung mit der folgenden allgemeinen Formel (2) und/oder ein partielles (Hydrolyse-)Kondensat davon ist: 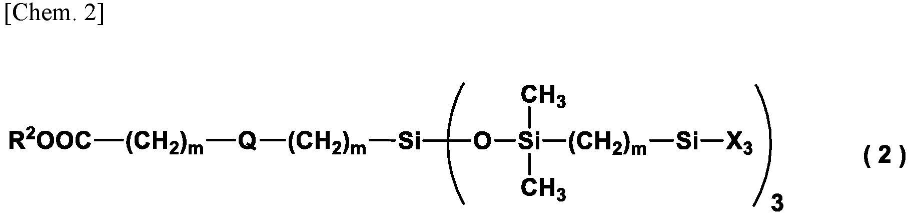 worin R² eine Alkylgruppe mit 1 bis 20 Kohlenstoffatomen, eine Arylgruppe mit 6 bis 20 Kohlenstoffatomen oder eine Aralkylgruppe mit 7 bis 20 Kohlenstoffatomen ist, Q eine Einfachbindung oder eine zweiwertige Gruppe ist, ausgewählt aus einer Silalkylengruppe, einer Silarylengruppe und einem linearen, verzweigten oder zyklischen zweiwertigen Organo(poly)siloxanrest mit 2 bis 10 Siliziumatomen, m unabhängig eine ganze Zahl von 1 bis 20 ist und X unabhängig eine Hydroxylgruppe oder eine hydrolysierbare Gruppe ist.

6. Beschichtungsmittelzusammensetzung nach einem der Ansprüche 1 bis 5, wobei die Komponente (B) ein Polyolester ist, der ein Kondensat aus einem mehrwertigen Alkohol, ausgewählt aus Neopentylglykol, Trimethylolethan, Trimethylolpropan, Glycerin, Pentaerythritol und Dipentaerythritol, und einer Fettsäure mit 3 bis 22 Kohlenstoffatomen enthält.

7. Oberflächenbehandlungsmittel, das die Beschichtungsmittelzusammensetzung nach einem der Ansprüche 1 bis 6 enthält.

8. Oberflächenbehandlungsmittel nach Anspruch 7, das außerdem ein Lösungsmittel umfasst.

9. Oberflächenbehandlungsmittel nach Anspruch 7 oder 8, das außerdem einen Hydrolyse-Kondensationskatalysator umfasst.

10. Oberflächenbehandlungsmittel nach einem der Ansprüche 7 bis 9, das einen gehärteten Film mit einem Ölsäure-Kontaktwinkel von 30° oder weniger bei 25°C und einer relativen Luftfeuchtigkeit von 40% ergibt.

11. Gegenstand, der auf seiner Oberfläche einen gehärteten Film des Oberflächenbehandlungsmittels nach einem der Ansprüche 7 bis 10 aufweist.

## Revendications

1. Composition d'agent de revêtement comportant en tant que composants essentiels :
(A) un composé d'organosiloxane (hydrolysable) contenant un groupe lipophile, contenant un groupe lipophile choisi parmi un groupe ayant pour formule (-C(=O)OR¹), un groupe ayant pour formule (-O-C(=O)R ¹ ), un groupe ayant pour formule (-C(=O)NR¹₂), un groupe ayant pour formule (-C(=O)SR¹) et un groupe ayant pour formule (-P(=O)(OR¹)₂ ), dans laquelle, dans la formule, R¹ est indépendamment un atome d'hydrogène, un groupe alkyle possédant de 1 à 30 atomes de carbone, un groupe aryle possédant de 6 à 30 atomes de carbone, ou un groupe aralkyle possédant de 7 à 30 atomes de carbone, et un groupe silanol ou un groupe silyle hydrolysable et/ou un condensat (d'hydrolyse) partiel de ceux-ci ; et
(B) un ester de polyol incluant un condensat d'un alcool divalent à hexavalent et d'un acide gras possédant de 3 à 22 atomes de carbone,
dans laquelle un rapport pondéral du composant (A) sur le composant (B) est dans un intervalle de 0,1 < (A)/(B) < 10.

2. Composition d'agent de revêtement selon la revendication 1, dans laquelle le composant (A) est un composé d'organosiloxane (hydrolysable) contenant un groupe lipophile ayant la formule générale (1) suivante et/ou un condensat (d'hydrolyse) partiel de celui-ci : 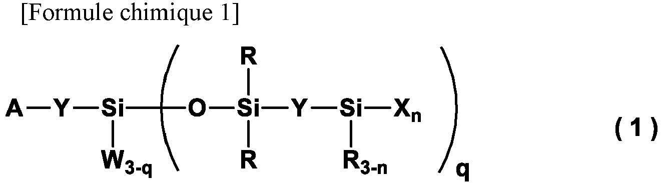 dans laquelle A est -C(=O)OR¹, -O-C(=O)R¹, -C(=O)NR¹₂, -C(=O)SR¹ ou-P(=O)(OR¹)₂, dans laquelle R¹ est indépendamment un atome d'hydrogène, un groupe alkyle possédant de 1 à 30 atomes de carbone, un groupe aryle possédant de 6 à 30 atomes de carbone, ou un groupe aralkyle possédant de 7 à 30 atomes de carbone, Y est indépendamment un groupe organique divalent, W est indépendamment un groupe alkyle possédant de 1 à 4 atomes de carbone, un groupe phényle, un groupe hydroxyle ou un groupe hydrolysable, R est indépendamment un groupe alkyle possédant de 1 à 4 atomes de carbone ou un groupe phényle, X est indépendamment un groupe hydroxyle ou un groupe hydrolysable, n est un entier de 1 à 3, et q est un entier de 1 à 3.

3. Composition d'agent de revêtement selon la revendication 2, dans laquelle, dans le composé d'organosiloxane (hydrolysable) contenant un groupe lipophile ayant la formule générale (1) du composant (A), Y est indépendamment un groupe alkylène possédant de 2 à 30 atomes de carbone qui peut contenir un groupe divalent choisi parmi -O-, -S-, -NR-, - C(=O)-, -C(=O)NR-, -OC(=O)NR-, dans laquelle R est un groupe alkyle possédant de 1 à 4 atomes de carbone ou un groupe phényle, un groupe silalkylène, un groupe silarylène, et un résidu d'organo(poly)siloxane divalent linéaire, ramifié ou cyclique possédant de 2 à 10 atomes de silicium, et peut contenir un groupe arylène possédant de 6 à 20 atomes de carbone.

4. Composition d'agent de revêtement selon la revendication 2 ou 3, dans laquelle dans le composé d'organosiloxane (hydrolysable) contenant un groupe lipophile ayant la formule générale (1) du composant (A), W est indépendamment choisi parmi les groupes constitués d'un groupe alkyle possédant de 1 à 4 atomes de carbone, d'un groupe phényle, d'un groupe hydroxyle, d'un groupe alcoxy possédant de 1 à 10 atomes de carbone, d'un groupe alcoxy substitué par alcoxy possédant de 2 à 10 atomes de carbone, d'un groupe acyloxy possédant de 1 à 10 atomes de carbone, d'un groupe alcényloxy possédant de 2 à 10 atomes de carbone, d'un atome d'halogène, d'un groupe oxime, d'un groupe isocyanate et d'un groupe cyanate.

5. Composition d'agent de revêtement selon l'une quelconque des revendications 1 à 4, dans laquelle le composant (A) est un composé d'organosiloxane (hydrolysable) contenant un groupe lipophile ayant la formule générale (2) suivante et/ou un condensat (d'hydrolyse) partiel de celui-ci : 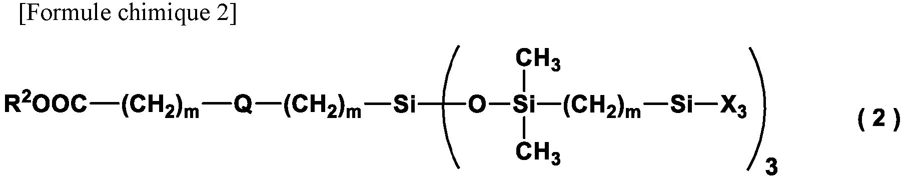 dans laquelle R² est un groupe alkyle possédant de 1 à 20 atomes de carbone, un groupe aryle possédant de 6 à 20 atomes de carbone ou un groupe aralkyle possédant de 7 à 20 atomes de carbone, Q est une liaison simple ou un groupe divalent choisi parmi un groupe silalkylène, un groupe silarylène et un résidu d'organo(poly)siloxane divalent linéaire, ramifié ou cyclique possédant de 2 à 10 atomes de silicium, m est indépendamment un entier de 1 à 20, et X est indépendamment un groupe hydroxyle ou un groupe hydrolysable.

6. Composition d'agent de revêtement selon l'une quelconque des revendications 1 à 5, dans laquelle le composant (B) est un ester de polyol incluant un condensat d'un alcool polyhydrique choisi parmi le néopentyl glycol, le triméthyloléthane, le triméthylolpropane, le glycérol, le pentaérythritol et le dipentaérythritol et un acide gras possédant de 3 à 22 atomes de carbone.

7. Agent de traitement de surface contenant la composition d'agent de revêtement selon l'une quelconque des revendications 1 à 6.

8. Agent de traitement de surface selon la revendication 7, comportant en outre un solvant.

9. Agent de traitement de surface selon la revendication 7 ou 8, comportant en outre un catalyseur de condensation par hydrolyse.

10. Agent de traitement de surface selon l'une quelconque des revendications 7 à 9, fournissant un film durci ayant un angle de contact avec l'acide oléique de 30° ou moins à 25 °C et une humidité relative de 40 %.

11. Article ayant un film durci de l'agent de traitement de surface selon l'une quelconque des revendications 7 à 10 sur sa surface.
